# EUROPEAN PATENT SPECIFICATION

(11) **EP 3 485 371 B1**
(45) Date of publication and mention of the grant of the patent: **11.06.2025**
(21) Application number: 17828387.5
(22) Date of filing: 12.07.2017
(51) Int. Cl.: G06F 40/174, G06F 40/205, G06F 40/151, G06F 9/30, G06F 16/84, G06F 16/00, G06F 17/40

(54) **SYSTEM AND METHOD FOR GENERATING STRUCTURED REPRESENTATIONS OF COMPLIANCE FORMS FROM MULTIPLE VISUAL SOURCE COMPLIANCE FORMS**
SYSTEM UND VERFAHREN ZUR ERZEUGUNG STRUKTURIERTER DARSTELLUNGEN VON KONFORMITÄTSFORMULAREN AUS KONFORMITÄTSFORMULAREN MIT MEHREREN VISUELLEN QUELLEN
SYSTÈME ET PROCÉDÉ DE GÉNÉRATION DE REPRÉSENTATIONS DE FORMULAIRES STRUCTURÉS DE CONFORMITÉ À PARTIR DE FORMULAIRES MULTIPLES DE CONFORMITÉ DE SOURCE VISUELLE

(30) Priority: 15.07.2016 US 201662362688 P; 02.11.2016 IN 201631037515; 20.12.2016 US 201615385244
(43) Date of publication of application: 22.05.2019
(73) Proprietor: Intuit Inc., Mountain View, CA 94043 (US)
(72) Inventor: MUKHERJEE, Saikat, Mountain View, California 94043 (US); KUMAR, Mritunjay, Mountain View, California 94043 (US); SREEPATHY, Anu, Mountain View, California 94043 (US); HALVORSEN, Per-Kristian, Mountain View, California 94043 (US)
(74) Representative: D Young & Co LLP
(86) International application number: PCT/US2017/041718
(87) International publication number: WO 2018/013692

(56) References cited:
- US-A1- 2003 233 296
- US-A1- 2006 184 870
- US-A1- 2009 327 513
- US-A1- 2014 223 277
- US-A1- 2014 258 825
- US-B1- 7 765 097

## Description

### BACKGROUND

Compliance forms are used in many situations in everyday life. Compliance forms can include any form that includes data fields in which people must provide inputs that comply with specific rules or functions. Compliance forms can include tax forms, financial disclosure forms, accounting forms, medical forms, payroll forms, etc. Due to the complexity surrounding many kinds of compliance forms, many people use electronic compliance form preparation systems to help fill out important compliance forms electronically. For example, each year millions of people use electronic tax return preparation systems to help prepare and file their tax returns. Typically, electronic tax return preparation systems receive information from users and then automatically populate various data fields in electronic versions of government tax forms. Electronic tax return preparation systems potentially represent a flexible and affordable source of tax return preparation assistance for customers. However, the processes that enable the electronic tax return preparation systems to automatically populate various data fields in tax forms often utilize large amounts of computing system and human resources in order to incorporate tax forms into the tax return preparation system.

For instance, due to changes in tax laws, or due to updates in government tax forms, tax forms can change from year to year, or even multiple times in a same year. If a tax form changes, or a new tax form is introduced, it can be very difficult to efficiently update the electronic tax return preparation system to correctly populate the various fields of the tax forms with the proper expected data values. For example, a particular line of a newly adjusted tax form may request an input according to a function that requires values from other lines of the tax form and possibly values from other tax forms or worksheets. These functions range from very simple to very complex. Updating the electronic tax return preparation system often includes utilizing a combination of tax experts, software and system engineers, and large amounts of computing resources to incorporate the tax form into the electronic tax return preparation system. This can lead to delays in releasing an updated version of the electronic tax return preparation system as well as considerable expenses. These expenses are then passed on to customers of the electronic tax return preparation system, as are the delays. Furthermore, these processes for updating electronic tax returns can introduce inaccuracies into the tax return preparation system.

These expenses, delays, and possible inaccuracies can have an adverse impact on traditional electronic tax return preparation systems. Customers may lose confidence in the electronic tax return preparation systems. Furthermore, customers may simply decide to utilize less expensive options for preparing their taxes.

These issues and drawbacks are not limited to electronic tax return preparation systems. Any electronic compliance form preparation system that assists users to electronically fill out compliance forms can suffer from these drawbacks when the compliance forms are updated, new compliance forms are released, or even when compliance forms remain the same but the compliance form preparation system needs to be updated or overhauled.

What is needed is a method and system that provide a foundation for efficiently incorporating new compliance forms into an electronic compliance form preparation system.

US 7,765,097 B1 discusses a method for automatic code generation via natural language processing that includes obtaining a parse tree.

### SUMMARY

Embodiments of the present disclosure address some of the shortcomings associated with traditional electronic compliance form preparation systems by providing methods and systems for generating structured representations of compliance forms that are machine-readable and well organized. Embodiments of the present disclosure retrieve compliance form data related to a compliance form having data fields that call for data entries in accordance with specific functions. The compliance form data can include one or more electronic versions of the compliance form in a visible format that is meant to be readable by a human. Embodiments of the present disclosure analyze the compliance form data and generate structured compliance form data in a machine-readable format and including, for each data field or line of the compliance form, many data items related to the data field or line. The structured form data can include, for each data field or line of the compliance form, a large number of facts or data items related to the line. These facts and data items can then be used by an electronic compliance form preparation system to easily determine the proper functions for providing appropriate data values in the in the data fields of the compliance form. Because the facts and data items are in a machine-readable format, the electronic compliance form preparation system can quickly analyze the structured compliance form data in order to incorporate the compliance form into the electronic compliance from preparation system. Thus, embodiments of the present disclosure take compliance form data and transform it into structured compliance form data, thereby improving the efficiency of electronic compliance form preparation systems that assist users to fill out electronic versions of compliance forms.

In one embodiment, a structured compliance form data generation system includes multiple parsing modules. Each of the parsing modules analyzes the compliance form data, or a particular portion of the compliance form data, and generates respective parsed form data. The parsed form data includes, for each data field of the compliance form, a set of facts or data items that are related to the data field. The parsed form data from one parsing module can include, for a given line or data field of the compliance form, facts or data items that overlap with the facts or data items included in parsed form data generated by another of the parsing modules. The parsed form data from one parsing module may include facts and data items that are distinct from the facts and data items included in the parsed form data generated by another of the parsing modules. The parsed form data from one parsing module may include facts and data items related to a data field for which the form data from another parsing module does not include any data items or facts. Thus, each of the parsing modules generates parsed form data that can include unique or redundant facts or data items related to the various lines or data fields of the compliance form.

In one embodiment, the structured compliance form data generation system includes a combiner module that generates combined parsed form data related to the compliance form data. In particular, the combiner module receives the parsed form data from the various parsing modules and combines them. The result of this combination is the combined parsed form data. The combined parsed form data can include, for each data field or line of the compliance form, some or all of the facts and data items related to that data field or line from the parsed form data generated by various parsing modules. The combined parsed form data is in a machine-readable and structured format.

In one example, a first parsing module may generate, for a particular data field or line of the compliance form, parsed form data that includes data items A, B, and C. A second parsing module may generate, for the particular data field of the compliance form, parsed form data that includes data items B, and D. when the combiner module combines the parsed form data from the first and second parsing modules, the combined parsed form data will include, for the particular data field, items A, B, C, and D. Thus, the combiner module generates combined parsed form data that includes, for each data field of the compliance form, all of the data items generated by the various parsing modules.

In one embodiment, the combiner module is configured to generate the combined parsed form data by selectively combining portions of the form data from the parsing modules. For example, some portions of the parsed form data from the various parsing modules may be contradictory or erroneous. In this case, the combiner module can selectively choose those data items from each of the parsing modules to be included in the combined parsed form data. In this way, the combiner module can selectively discard contradictory, erroneous, or superfluous data items from the first parsed form data provided by the parsing modules.

In one embodiment, the structured compliance form data generation system includes one or more extractor modules that generate extracted form data based on the combined parsed form data. In particular, the extractor modules can extract, for each data field of the compliance form, additional data items from the combined parsed form data. These additional data items can supplement the data items in the combined parsed form data.

In one embodiment, the structured compliance form data generation system includes a structured form generation module configured to generate a structured compliance form data from the combined parsed form data and the extracted form data. In particular, the structured form generation module generates the structured compliance form data by adding the additional data items from the extracted form data into the combined parsed form data. The structured compliance form data is in a machine-readable format and includes, for each data field of the compliance form, all of the data items identified by the various parsing modules and extractor modules.

In one embodiment, the compliance form is a tax form and the structured compliance form data generation system is a structured tax form data generation system. The structured compliance form data generation system retrieves compliance form data related to the tax form. The compliance form data can include one or more visual electronic versions of the tax form. The one or more visual electronic versions of the tax form can include one or more of a PDF, a free text version of the tax form, an accessible PDF, or other electronic versions of the tax form. By themselves, these visual electronic versions of the tax form cannot be readily incorporated into an electronic tax return preparation system. Thus, the structured compliance form data generation system is configured to take the electronic visual versions of the tax form, as well as other compliance form data related to the tax form, and generate a structured version of the tax form. The structured version of the tax form includes, for each data field of the tax form, various data items related to the data field. These data items can include text descriptions of the data field, a line number corresponding to the data field, an Internal Revenue Service (IRS) name for the data field, an internal tax return preparation system name for the data field, tax concepts related data field, dependencies on which a function for generating a proper data entry for the data field is based, constants included in the function, a page number of the form on which the data field is found, data related to the size and location of a bounding box of the data field, and many other kinds of data items that may be useful for the tax return preparation system in incorporating the tax form into the tax return preparation system.

In one embodiment, the structured compliance form data generation system includes one or more of an accessible PDF parser module, a worksheets parser, and IRS instructions parser, a free text form parser, and an internal form parser. The accessible PDF parser module analyzes an accessible PDF version of the tax form and parses out data items related to each data field of the tax form. The worksheets parser parses out data items based on worksheets related to the tax form. The free text form parser analyzes a free text version of the tax form and parses out data items related to each data field of the tax form. The internal form parser analyzes internal form data related to internal forms used by the tax return preparation system in preparing tax returns and extracts data items related to each data field in the tax form from the internal forms. The IRS instructions parser analyzes IRS instructions related to tax form and parses out data items related to each data field based on the IRS instructions.

In one embodiment, the combiner module combines parsed PDF data, the parsed worksheets data, the parsed free text data, the parsed instructions data, and the parsed internal form data. In particular, the combiner module generates combined parsed form data by combining the various parsed data from the various parsing modules.

In one embodiment, the structured compliance form data generation system includes one or more of a constants extractor module, a dependencies extractor module, and a concepts extractor module. These extractor modules receive the combined parsed form data and extract certain data items from the combined parsed form data.

In one embodiment, the dependencies extractor module extracts, for each data field of the tax form, dependencies. The dependencies relate to data items on which is based a function for generating a proper data value for a given data field. For example, text description related to a data field may refer to other lines or data fields in the tax form or other lines or data fields from other tax forms. The dependencies extractor module can determine that these other lines will be included in a function for generating a proper data value for a given data field.

In one embodiment, the constants extractor module analyzes the data items related to data field and determines what constants are present. These constants may include dollar values that factor into a function for generating for the data field.

In one embodiment, the concepts extractor module analyzes data items related to a data field and identifies tax concepts related to data field. For example, the various data items related to the data field may indicate that the data field is related to mortgage interest deductions. The concepts extractor module can thus identify and list concepts related to a given data field.

The extractor modules thus generate additional data items related to each data field. The structured form generation module takes the combined parsed form the and combines it with the additional data items generated by the extractor modules. The structured form generation module generates structured compliance form data that is the combination of the combined parsed form data and the outputs of the extractor modules.

In one embodiment, the combiner module includes or is part of the structured form generation module.

According to an embodiment, the structured compliance form data generation system can also identify whether a line or data field of a tax form expects a calculation based on a specific function or whether the line or data field expect a user contributed input.

Embodiments of the present disclosure can significantly reduce the time that is required to create a compliance form knowledge base. Embodiments of the present disclosure can help in inferring different information from compliance forms. Embodiments of the present disclosure can quickly and efficiently update the knowledge base if compliance forms change. Embodiments of the present disclosure can provide a consolidated structured version of various compliance forms.

Embodiments of the present disclosure address some of the shortcomings associated with traditional electronic compliance form preparation systems that do not adequately and efficiently incorporate compliance forms. An electronic compliance form preparation system in accordance with one or more embodiments enables efficient and reliable incorporation of compliance forms by generating structured compliance form data related to the compliance form, thereby enabling an electronic compliance form preparation system to quickly incorporate the compliance form by analyzing the structured compliance form data. The various embodiments of the disclosure can be implemented to improve the technical fields of data processing, resource management, data collection, and user experience. Therefore, the various described embodiments of the disclosure and their associated benefits amount to significantly more than an abstract idea. In particular, by generating structured compliance form data, electronic compliance form preparation systems can learn and incorporate compliance forms more efficiently.

Using the disclosed embodiments of a method and system for generating structured compliance form data, a method and system for generating structured compliance form data more accurately is provided. Therefore, the disclosed embodiments provide a technical solution to the long standing technical problem of efficiently learning and incorporating compliance forms in an electronic compliance form preparation system.

In addition, the disclosed embodiments of a method and system for generating structured compliance form data are also capable of dynamically adapting to constantly changing fields such as tax return preparation and other fields that utilize compliance forms. Consequently, the disclosed embodiments of a method and system for generating structured compliance form data also provide a technical solution to the long standing technical problem of static and inflexible electronic compliance form preparation systems.

The result is a much more accurate, adaptable, and robust method and system for generating structured compliance form data, but thereby serves to bolster confidence in electronic compliance form preparation systems. This, in turn, results in: less human and processor resources being dedicated to analyzing compliance forms because more accurate and efficient analysis methods can be implemented, i.e., fewer processing and memory storage assets; less memory and storage bandwidth being dedicated to buffering and storing data; less communication bandwidth being utilized to transmit data for analysis.

The disclosed method and system for generating structured compliance form data does not encompass, embody, or preclude other forms of innovation in the area of electronic compliance form preparation systems. In addition, the disclosed method and system for generating structured compliance form data is not related to any fundamental economic practice, fundamental data processing practice, mental steps, or pen and paper based solutions, and is, in fact, directed to providing solutions to new and existing problems associated with electronic compliance form preparation systems. Consequently, the disclosed method and system for generating structured compliance form data, does not encompass, and is not merely, an abstract idea or concept.

### BRIEF DESCRIPTION OF THE DRAWINGS

FIG. 1 is a block diagram of software architecture for generating structured compliance form data, in accordance with one embodiment.
FIG. 2 is a block diagram of a process for generating structured compliance form data, in accordance with one embodiment.
FIG. 3 is a flow diagram of a process for generating structured compliance form data, in accordance with one embodiment.
FIG. 4 is a block diagram of software architecture for generating structured tax form data, in accordance with one embodiment.

Common reference numerals are used throughout the FIG.s and the detailed description to indicate like elements. One skilled in the art will readily recognize that the above FIG.s are examples and that other architectures, modes of operation, orders of operation, and elements/functions can be provided and implemented without departing from the characteristics and features of the invention, as set forth in the claims.

### DETAILED DESCRIPTION

Embodiments will now be discussed with reference to the accompanying FIG.s, which depict one or more exemplary embodiments. Embodiments may be implemented in many different forms and should not be construed as limited to the embodiments set forth herein, shown in the FIG.s, and described below. Rather, these exemplary embodiments are provided to allow a complete disclosure that conveys the principles of the invention, as set forth in the claims, to those of skill in the art.

Herein, the term "production environment" includes the various components, or assets, used to deploy, implement, access, and use, a given application as that application is intended to be used. In various embodiments, production environments include multiple assets that are combined, communicatively coupled, virtually connected, physically connected, or otherwise associated with one another, to provide the production environment implementing the application.

As specific illustrative examples, the assets making up a given production environment can include, but are not limited to, one or more computing environments used to implement the application in the production environment such as one or more of a data center, a cloud computing environment, a dedicated hosting environment, and other computing environments in which one or more assets used by the application in the production environment are implemented; one or more computing systems or computing entities used to implement the application in the production environment; one or more virtual assets used to implement the application in the production environment; one or more supervisory or control systems, such as hypervisors, or other monitoring and management systems, used to monitor and control one or more assets or components of the production environment; one or more communications channels for sending and receiving data used to implement the application in the production environment; one or more access control systems for limiting access to various components of the production environment, such as firewalls and gateways; one or more traffic or routing systems used to direct, control, or buffer, data traffic to components of the production environment, such as routers and switches; one or more communications endpoint proxy systems used to buffer, process, or direct data traffic, such as load balancers or buffers; one or more secure communication protocols or endpoints used to encrypt/decrypt data, such as Secure Sockets Layer (SSL) protocols, used to implement the application in the production environment; one or more databases used to store data in the production environment; one or more internal or external services used to implement the application in the production environment; one or more backend systems, such as backend servers or other hardware used to process data and implement the application in the production environment; one or more software systems used to implement the application in the production environment; or any other assets/components making up an actual production environment in which an application is deployed, implemented, accessed, and run, e.g., operated, as discussed herein, or as known in the art at the time of filing, or as developed after the time of filing.

As used herein, the terms "computing system", "computing device", and "computing entity", include, but are not limited to, a virtual asset; a server computing system; a workstation; a desktop computing system; a mobile computing system, including, but not limited to, smart phones, portable devices, or devices worn or carried by a user; a database system or storage cluster; a switching system; a router; any hardware system; any communications system; any form of proxy system; a gateway system; a firewall system; a load balancing system; or any device, subsystem, or mechanism that includes components that can execute all, or part, of any one of the processes and operations as described herein.

In addition, as used herein, the terms computing system and computing entity, can denote, but are not limited to, systems made up of multiple: virtual assets; server computing systems; workstations; desktop computing systems; mobile computing systems; database systems or storage clusters; switching systems; routers; hardware systems; communications systems; proxy systems; gateway systems; firewall systems; load balancing systems; or any devices that can be used to perform the processes or operations as described herein.

As used herein, the term "computing environment" includes, but is not limited to, a logical or physical grouping of connected or networked computing systems or virtual assets using the same infrastructure and systems such as, but not limited to, hardware systems, software systems, and networking/communications systems. Typically, computing environments are either known environments, e.g., "trusted" environments, or unknown, e.g., "untrusted" environments. Typically, trusted computing environments are those where the assets, infrastructure, communication and networking systems, and security systems associated with the computing systems or virtual assets making up the trusted computing environment, are either under the control of, or known to, a party.

In various embodiments, each computing environment includes allocated assets and virtual assets associated with, and controlled or used to create, deploy, or operate an application.

In various embodiments, one or more cloud computing environments are used to create, deploy, or operate an application that can be any form of cloud computing environment, such as, but not limited to, a public cloud; a private cloud; a virtual private network (VPN); a subnet; a Virtual Private Cloud (VPC); a sub-net or any security/communications grouping; or any other cloud-based infrastructure, sub-structure, or architecture, as discussed herein, or as known in the art at the time of filing, or as developed after the time of filing.

In many cases, a given application or service may utilize, and interface with, multiple cloud computing environments, such as multiple VPCs, in the course of being created, deployed, or operated.

As used herein, the term "virtual asset" includes any virtualized entity or resource or virtualized part of an actual "bare metal" entity. In various embodiments, the virtual assets can be, but are not limited to, virtual machines, virtual servers, and instances implemented in a cloud computing environment; databases associated with a cloud computing environment, or implemented in a cloud computing environment; services associated with, or delivered through, a cloud computing environment; communications systems used with, part of, or provided through, a cloud computing environment; or any other virtualized assets or sub-systems of "bare metal" physical devices such as mobile devices, remote sensors, laptops, desktops, point-of-sale devices, etc., located within a data center, within a cloud computing environment, or any other physical or logical location, as discussed herein, or as known/available in the art at the time of filing, or as developed/made available after the time of filing.

In various embodiments, any, or all, of the assets making up a given production environment discussed herein, or as known in the art at the time of filing, or as developed after the time of filing, can be implemented as one or more virtual assets.

In one embodiment, two or more assets, such as computing systems or virtual assets, two or more computing environments, are connected by one or more communications channels including but not limited to, Secure Sockets Layer communications channels and various other secure communications channels, or distributed computing system networks, such as, but not limited to: a public cloud; a private cloud; a virtual private network (VPN); a subnet; any general network, communications network, or general network/communications network system; a combination of different network types; a public network; a private network; a satellite network; a cable network; or any other network capable of allowing communication between two or more assets, computing systems, or virtual assets, as discussed herein, or available or known at the time of filing, or as developed after the time of filing.

As used herein, the term "network" includes, but is not limited to, any network or network system such as, but not limited to, a peer-to-peer network, a hybrid peer-to-peer network, a Local Area Network (LAN), a Wide Area Network (WAN), a public network, such as the Internet, a private network, a cellular network, any general network, communications network, or general network/communications network system; a wireless network; a wired network; a wireless and wired combination network; a satellite network; a cable network; any combination of different network types; or any other system capable of allowing communication between two or more assets, virtual assets, or computing systems, whether available or known at the time of filing or as later developed.

As used herein, the term "user" includes, but is not limited to, any party, parties, entity, or entities using, or otherwise interacting with any of the methods or systems discussed herein. For instance, in various embodiments, a user can be, but is not limited to, a person, a commercial entity, an application, a service, or a computing system.

As used herein, the term "relationship(s)" includes, but is not limited to, a logical, mathematical, statistical, or other association between one set or group of information, data, or users and another set or group of information, data, or users, according to one embodiment. The logical, mathematical, statistical, or other association (i.e., relationship) between the sets or groups can have various ratios or correlation, such as, but not limited to, one-to-one, multiple-to-one, one-to-multiple, multiple-to-multiple, and the like, according to one embodiment. As a non-limiting example, if the disclosed electronic compliance form preparation system determines a relationship between a first group of data and a second group of data, then a characteristic or subset of a first group of data can be related to, associated with, or correspond to one or more characteristics or subsets of the second group of data, or vice-versa, according to one embodiment. Therefore, relationships may represent one or more subsets of the second group of data that are associated with one or more subsets of the first group of data, according to one embodiment. In one embodiment, the relationship between two sets or groups of data includes, but is not limited to similarities, differences, and correlations between the sets or groups of data.

### HARDWARE ARCHITECTURE

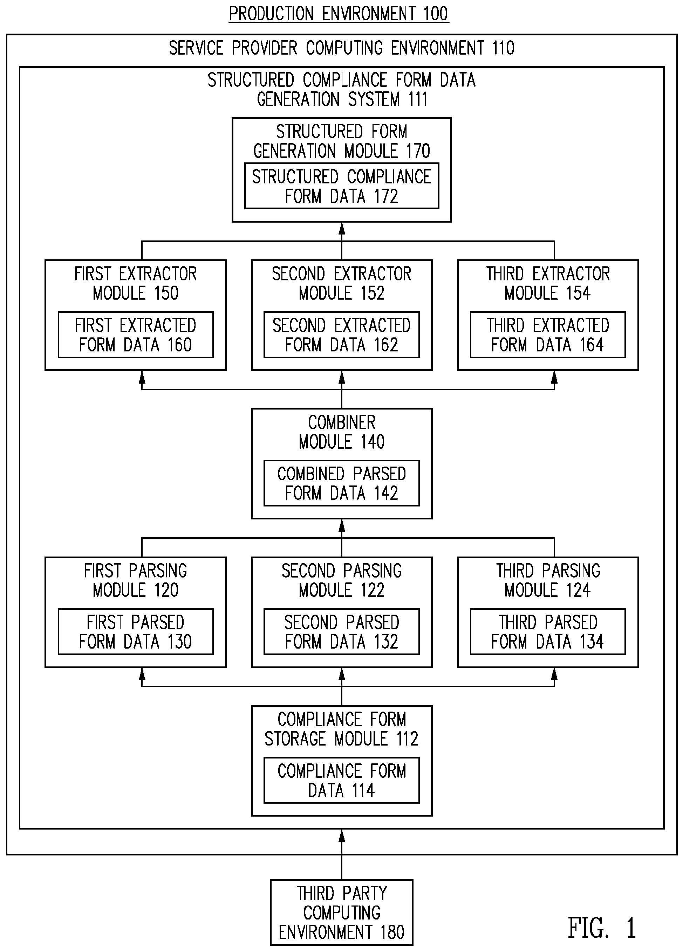

FIG. 1 illustrates a block diagram of a production environment 100 for generating structured compliance form data, according to one embodiment. Embodiments of the present disclosure provide methods and systems for generating structured compliance form data, according to one embodiment. In particular, embodiments of the present disclosure store compliance form data related to a compliance form having data fields to be completed according to functions set forth in the compliance form. Embodiments of the present disclosure utilize multiple parsing modules to analyze the compliance form data based on respective parsing processes. Each parsing module generates respective parsed form data that includes, for each data field of the compliance form, various data items related to the data field and that could be helpful to an electronic system for identifying an appropriate function for providing a data value for the data field. Embodiments of the present disclosure generate combined parsed form data by combining the various parsed form data from the multiple parsing modules. The combined parsed form data includes, for each data field of the compliance form, the various data items identified by the multiple parsing modules as being related to the data field. Embodiments of the present disclosure utilize one or more extractor modules to analyze the combined parsed form data and to extract additional data items related to each data field of the compliance form. Embodiments of the present disclosure utilize a structured form generation module to generate structured compliance form data based on the combined parsed form data and the additional data items extracted by the one or more extractor modules. Thus, the structured compliance form data includes, for each data field of the compliance form, all of the data items gathered by the parsing modules and the extractor modules. The structured compliance form data is in a machine-readable format that can be easily accessed by an electronic compliance form preparation system for analyzing the compliance form data in order to identify appropriate functions for generating proper data values for each data field of the compliance form.

In addition, the disclosed method and system for generating structured compliance form data provides for significant improvements to the technical fields of electronic compliance form preparation, data processing, data management, and user experience.

In addition, as discussed above, the disclosed method and system for generating structured compliance form data provide for the processing and storing of smaller amounts of data, i.e., more efficiently analyze forms and data; thereby eliminating unnecessary data analysis and storage. Consequently, using the disclosed method and system for generating structured compliance form data results in more efficient use of human and non-human resources, fewer processor cycles being utilized, reduced memory utilization, and less communications bandwidth being utilized to relay data to, and from, backend systems and client systems, and various investigative systems and parties. As a result, computing systems are transformed into faster, more efficient, and more effective computing systems by implementing the method and system for generating structured compliance form data.

The production environment 100 includes a service provider computing environment 110 and a third party computing environment 180, according to one embodiment. The computing environments 110 and 180 are communicatively coupled to each other with one or more communication channels, according to one embodiment.

The service provider computing environment 110 represents one or more computing systems such as a server or distribution center that is configured to receive, execute, and host one or more electronic compliance form preparation systems (e.g., applications) for access by one or more users, for generating structured compliance form data, according to one embodiment. The service provider computing environment 110 represents a traditional data center computing environment, a virtual asset computing environment (e.g., a cloud computing environment), or a hybrid between a traditional data center computing environment and a virtual asset computing environment, according to one embodiment.

The service provider computing environment 110 includes a structured compliance form data generation system 111 configured to provide compliance form generation services for compliance form preparation systems that assist users in electronically filling out compliance forms.

According to one embodiment, the structured compliance form data generation system 111 can be a system that generates structured compliance form data based on compliance forms related to one or more of tax return preparation, invoicing, payroll management, billing, banking, investments, loans, credit cards, real estate investments, retirement planning, bill pay, and budgeting. The structured compliance form data generation system 111 can be a standalone system that provides structured compliance form data generation services to users. Alternatively, the structured compliance form data generation system 111 can be integrated into other software or service products provided by a service provider.

According to an embodiment, the structured compliance form data generation system 111 can be a part of an electronic compliance form preparation system that assists users in electronically filling out compliance forms. The electronic compliance form preparation system utilizes the structured compliance form data generated by the structured compliance form data generation system 111 in order to learn the appropriate functions for generating proper data values for the data fields of the compliance forms. Because the structured compliance form is well-organized and includes, for each data field of the compliance form, many data items that may be useful to an electronic compliance form preparation system in learning the proper functions for the various data fields, the structured compliance form data generation system 111 greatly enhances the efficiency of the electronic compliance form preparation system in learning the correct functions for the various data fields of the compliance form. Once the electronic compliance form preparation system has learned the functions that produce the requested data entries for the data fields, the electronic compliance form preparation system can assist individual users in electronically completing the form.

The structured compliance form data generation system 111 includes a compliance form storage module 112, a first parsing module 120, a second parsing module 122, a third parsing module 134, a combiner module 140, a first extractor module 150, a second extractor model 152, a third extractor module 154, and a structured form generation module 170, according to one embodiment.

According to one embodiment, the compliance form storage module 112 includes compliance form data 114. The compliance form data 114 can include data related to one or more visual versions of the compliance form. These visual versions of the compliance form can include a PDF version of the compliance form, a free text version of the compliance form, an image of the compliance form, an accessible PDF version of the compliance form, or other versions of the compliance form that are structured to be readable by a human when presented.

In one embodiment, the compliance form data 114 can include data related to instructions for filling out the compliance form. The instructions can include one or more separate instruction documents provided by an agency that issued the compliance form. The instructions can also include an internal instructions form generated by an electronic compliance form preparation system related to the structured compliance form data generation system 111.

In one embodiment, the compliance form data 114 can include worksheets related to filling out the compliance form. The worksheets can include agency worksheets provided by an agency that generated the compliance form, e.g. the IRS in the case of a tax form. The worksheets can also include internal worksheets generated and used by an electronic compliance form preparation system related to the structured compliance form data generation system 111.

In one embodiment, the compliance form data 114 can include current or previous software instructions used by an electronic compliance form preparation system in assisting users to fill out electronic compliance forms.

In one embodiment, the compliance form data 114 can include data related to other compliance forms that may be referenced by or otherwise related to the compliance form.

In one embodiment, an agency that issued the compliance form can also set forth standard names for the data fields or lines in the compliance form as well as the data fields or lines of other compliance forms related to the compliance form. The agency can also set forth standard names for the compliance forms themselves.

In one embodiment, an electronic compliance form preparation system can also include one or more internally used names for the various compliance forms, the lines or data fields in the compliance forms, and other data items related to the data fields of the compliance forms.

In one embodiment, the various internal and agency names for the various compliance forms, lines of the compliance forms, data fields of the compliance forms, etc. are used as variables in the software instructions utilized by an electronic compliance form preparation system in assisting users to fill out electronic compliance forms.

The structured compliance form data generation system 111 can receive a portion of the compliance form data from the third party computing environment 180. The third party computing environment can include third party agencies such as government agencies that publish compliance forms, for example tax forms.

In one embodiment, the structured compliance form data generation system 111 utilizes the first parsing module 120, the second parsing module 122, and the third parsing module 124 to identify relevant data items related to each line or data field of the compliance form. Relevant data items correspond to data that may be useful to an electronic compliance form preparation system in determining what is an appropriate function for generating a data value for the line or data field of the compliance form. Each parsing module generates respective parsed form data. The parsed form data can be in a format that groups data items related to each line or data field of the compliance form. The data items can include an agency name for the line or data field, a free text description of the data field, a page number on which the data field appears, a name of the compliance form, a position of the data field within the compliance form, a size of the bounding box of the data field, a line number related to the data field, instructions related to the data field, portions of software code related to the data field from a compliance form preparation system, or other kinds of data items that can be useful to a compliance form preparation system in determining an appropriate function for generating a data value for the data field. In one embodiment, the structured compliance form data generation system can include more than three parsing modules. In one embodiment, the structured compliance from data generation system 111 can include only two parsing modules.

In one embodiment, the first parsing module 120 generates first parsed form data 130 based on a first parsing process of the compliance form data 114. In particular, the first parsing module 120 analyzes the compliance form data 114, or a particular portion of the compliance form data 114 in order to generate first parsed form data 130. The first parsed form data 130 can include, for each of one or more data fields of the compliance form, one or more data items related to the data field as identified by the first parsing module 120.

In one embodiment, the first parsing module 120 generates first parsed form data 130 based on a first parsing process of the compliance form data 114. In particular, the first parsing module 120 analyzes the compliance form data 114, or a particular portion of the compliance form data 114 in order to generate first parsed form data 130. The first parsed form data 130 can include, for each of one or more data fields of the compliance form, one or more data items related to the data field as identified by the first parsing module 120.

In one embodiment, the second parsing module 122 generates second parsed form data 132 based on a second parsing process of the compliance form data 114. In particular, the second parsing module 122 analyzes the compliance form data 114, or a particular portion of the compliance form data 114 in order to generate second parsed form data 132. The second parsed form data 132 can include, for each of one or more data fields of the compliance form, one or more data items related to the data field as identified by the second parsing module 122.

In one embodiment, the third parsing module 124 generates third parsed form data 134 by performing a third parsing process of the compliance form data 114. In particular, the third parsing module 124 analyzes the compliance form data 114, or a particular portion of the compliance form data 114, in order to generate third parsed form data 134. The third party form data 134 can include, for each of one or more data fields of the compliance, one or more data items related to the data field as identified by the third parsing module 134.

In one embodiment, the first parsed form data 130, the second parsed form data 132, and the third parsed form data 134 each include the same data format. For example, each of the first, second, and third parsed form data 130, 132, and 134, can include a respective JavaScript object Notation (JSON) file. Each JSON file can include a list of data fields of the compliance one and a group of data items related to each data field. Those of skill in the art will understand, in light of the present disclosure, that the first, second, and third parsed form data 130, 132, and 134 can include other suitable data formats. All such other data formats followed in the scope of the present disclosure.

In one embodiment, the first parsing module 120 can include an accessible PDF parsing module. In this case, the compliance form data 114 includes an accessible PDF version of the compliance form. The accessible PDF parsing module analyzes the accessible PDF and identifies data items related to various lines or data fields of the compliance form and generates parsed form data 130 listing the data items associated with each line or data field of the compliance form that were identified by the accessible PDF parsing process.

In one embodiment, the second parsing module 122 can include a free text parsing module. In this case, the compliance form data 114 can include a free text version of the compliance form. The free text parsing module analyzes the free text version of the form and identifies data items related to each line or data field of the compliance form and generates parsed form data 132 listing the data items associated with each line or data field of the compliance forms that were identified by the free text parsing process.

In one embodiment, the third parsing module 124 includes an instructions parsing module. In this case, the compliance form data 114 can include instruction sheets related to the compliance form. The instruction sheets can be provided by the same agency that provided the compliance form. Additionally, or alternatively, the instruction sheets can be internal instruction sheets generated by an electronic compliance form preparation system. The instructions parsing module analyzes the instruction sheets and identifies data items related to each line or data field of the compliance form and generates parsed form data 134 listing the data items associated with each line or data field of the compliance form that were identified by the instructions parsing process.

In one embodiment, the parsed form data 130 can include, for a given data field of the compliance form, facts or data items that overlap with the facts or data items included in the second and third parsed form data 132, 134. The parsed form data 130, 132, 134 may include facts and data items that are distinct from each other. The parsed form data 130, 132, 134 may include facts and data items related to a data field for which the form data from another parsing module does not include any data items or facts. Thus, each of the parsing modules 120, 122, 124 generates parsed form data that can include unique or redundant facts or data items related to the various data fields of the compliance form.

In one embodiment, the structured compliance form data generation system 111 utilizes the combiner module to generate combined parsed form data 142. The combiner module 140 generates the combined parsed form data 142 by combining the first parsed form data 130, the second parsed form data 132, and the third parsed form data 134 into a single data file. The combined parsed form data 142 can be in a same format, e.g. JSON, as the first parsed form data 130, the second parsed form data 132, and the third parsed form data 134. The combined parsed form data 142 includes, for each line or data field of the compliance form, all the data items identified in the first parsed form data 130, the second parsed form data 132, and the third parsed form data 134.

In one example, the first parsed form data 130 may include, for a particular data field of the compliance form, data items A, B, and C. The second parsed form data 132 may include, for the particular data field of the compliance form, data items B, and D. the third parsed form data 134 may include, for the particular data field of the compliance form, data items D and E. When the combiner module 140 combines the first parsed form data 130, the second parsed form data 132, and the third parsed form data 134, parsed form data from the first and second parsing modules, the combined parsed form data 142 will include, for the particular data field, items A, B, C, D and E. Thus, the combiner module generates combined parsed form data that includes, for each data field of the compliance form, all or some of the data items generated by the various parsing modules.

In one embodiment, the combiner module 140 is configured to generate the combined parsed form data 142 by selectively combining portions of the first parsed form data 130, the second parsed form data 132, and the third parsed form data 134. For example, some portions of the parsed form data 130, 132, and 134 may be contradictory or erroneous. In this case, the combiner module 140 can selectively choose those data items from each of the first, second, and third parsed form data 130, 132, and 134 to be included in the combined parsed form data 142. In this way, the combiner module 140 can selectively discard contradictory, erroneous, or superfluous data items from the first parsed form data 130, the second parsed form data 132, and the third parsed form data 134.

In one embodiment, the structured compliance form data generation system 111 utilizes one or more of the first extractor module 150, the second extractor module 152, and the third extractor module 154 to analyze the combined parsed form data 142 in order to extract additional data items related to each data field of the compliance form.

In one embodiment, the first extractor module 150 analyzes the combined parsed form data 142 in accordance with a first extraction process and generates first extracted form data 160. The first extracted form data 160 includes additional data items related to each of one or more of the data fields of the compliance form.

In one embodiment, the second extractor module 152 analyzes the combined parsed form data 142 in accordance with a second extraction process and generates second extracted form data 162. The second extracted form data 162 includes additional data items related to each of one or more data fields of the compliance form.

In one embodiment, the third extractor module 154 analyzes the combined parsed form data 142 in accordance with a third extraction process and generates third extracted form data 164. The third extracted form data 164 includes additional data items related to each of one or more of the data fields of the compliance form.

In one embodiment, the first, second, and third extracted form data 160, 162, and 164 include data files in the same format as the combined parsed form data 142. In one embodiment, each of the first, second, and third extracted form data 160, 162, and 164 include the combined parsed form data 142 as well as the respective additional data items identified by the first, second, or third extractor module 150, 152, or 154. In one embodiment, each of the first, second, and third extracted form data 160, 162, and 164 include only the additional data items identified for each line or data field of the compliance form.

In one embodiment, the first extractor module 150 is a constants extractor module configured to identify, for each data field of the compliance form, constants related to the lines or data fields of the compliance form. In an example in which the compliance form is a tax form, the combined parsed form data 142 may include a text description of a particular line or data field of the tax form. The constants extractor module can analyze the text description of the particular line or data field and can identify one or more specific dollar amounts listed in the text description of the line or data field. The dollar amounts are constants that are likely to factor into an appropriate function for generating a data value for the wine or data field.

In one embodiment, the second extractor module 152 is a dependencies extractor module configured to identify, for each data field of the compliance form, dependencies related to the lines or data fields of the compliance form. In an example in which the compliance form is a tax form, the combined parsed form data 142 may include a text description of a particular line or data field of the tax form. The dependencies extractor module can analyze the text description of the particular line or data field and can identify one or more references to other lines in the tax form or other lines and other tax forms listed in the text description of the line or data field. These references to other lines or data fields in the tax form or other worksheets or tax forms are dependencies on which an appropriate function for generating a data value for the line or data field is likely to depend. The second extracted form data 162 lists the extracted dependencies for each line or data field of the tax form.

In one embodiment, the third extractor module 154 is a concepts extractor module configured to identify concepts related to the lines or data fields of the tax form. In an example in which the compliance form is a tax form, the combined parsed form data 142 may include a reference to a particular tax topic or tax concept, e.g. charitable contribution deductions. The third extracted form data 164 identifies and lists the concepts related to each line or data field of the tax form.

The structured compliance form data generation system 111 can include many other kinds of extractor modules other than those described herein. Additionally, the structured compliance form data generation system 111 can include only a single extractor module. Alternatively, the structured compliance form data generation system 111 can include more extractor modules than are shown in FIG.1. In one embodiment, the structured compliance form data generation system does not include any extractor modules, in which case, the structured compliance form data 172 may simply be the combined parsed form data 142. In one embodiment, one or more of the extractor modules act as parsing modules that combine their generated data with the parsed form data 130, 132, 134 to generate the combined parsed form data 142. Those of skill in the art will recognize, in light of the present disclosure, that many other configurations of the various modules are possible and that other module than those shown can be included in a structured compliance form data generation system 111.

In one embodiment, the structured compliance form data generation system 111 utilizes the structured form generation module170 to generate structured compliance form data 172. The structured compliance form data 172 includes, for each line or data field of the compliance form, the data items identified by the various parsing modules and extractor modules. The structured form generation module 170 can then combine the first, second, and third extracted form data 160, 162, 164 with the combined parsed form data 142 to generate the structured compliance form data 172. The structured compliance form data 172 can be in a same format as the combined parsed form data 142, e.g. a JSON. Alternatively, the structured compliance form data 172 can be in a different format from the data combined parsed form data 142.

In one embodiment, the structured compliance form data 172 corresponds to a structured version of the compliance form. The structured compliance form data 172 is in a machine-readable format that can be easily analyzed by a compliance form preparation system in order to determine the appropriate function for generating proper data values for each line or data field of the compliance form. In this way, the structured compliance form data generation system 111 enables efficient incorporation of compliance forms into a compliance form preparation system that assists users in electronically filling out compliance forms.

According to an embodiment, the structured compliance form data generation system 111 can also identify whether a line or data field of the tax form expects calculation based on a specific function, whether the line or data field expect a user contributed input.

Embodiments of the present disclosure address some of the shortcomings associated with traditional electronic compliance form preparation systems that do not efficiently learn and incorporate compliance forms into the electronic compliance form preparation system. A structured compliance form data generation system in accordance with one or more embodiments provides enables for efficient incorporation of compliance forms into an electronic compliance form preparation system that assists users in filling out compliance forms electronically.

### PROCESS

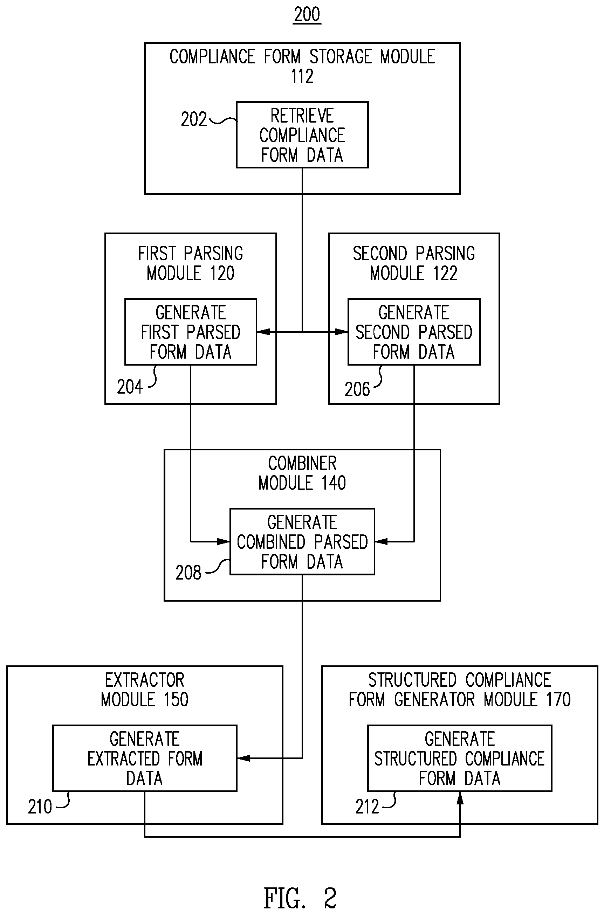

FIG. 2 illustrates a functional flow diagram of a process 200 for generating structured compliance form data, in accordance with one embodiment.

At block 202 the compliance forms storage module 112 retrieves compliance form data related to a compliance form having a plurality of data fields that expect perspective data values in accordance with specified functions, according to one embodiment. From block 202 the process proceeds to block 204 and block 206.

At block 204, the first parsing module 120 generates first parsed form data by performing a first parsing process on the compliance form data, according to one embodiment. The first parsed form data identifies, for each data field of the compliance form, first data items related to the data field, according to one embodiment.

At block 206 the second parsing module 122 generates second parsed form data by performing a second parsing process on the compliance form data, according to one embodiment. The second parsed form data identifies, for each data field of the compliance form, second data items related to the data field, according to one embodiment. From block 204 and 206, the process proceeds to block 208.

At block 208, the combiner module 140 generate combined parsed form data by combining the first parsed form data and the second parsed form data, according to one embodiment. The combined parsed form data includes first and second data items from the first and second parsed form data, according to one embodiment. From block 208, the process proceeds to block 210.

At block 210, the extractor module 150 generates extracted form data by performing an extraction process on the combined parsed form data, according to one embodiment. The extracted form data identifies, for each data field, extracted data items related to the data field. From block 210 the process proceeds to block 212.

At block 212, the structured compliance from generator module can generate structured compliance form data by combining the combined parsed form data with the extracted form data, according to one embodiment. The structured compliance form data includes first data items, second data items, and extracted data items related to the data fields, according to one embodiment.

Although a particular sequence is described herein for the execution of the process 200, other sequences can also be implemented. For example, according to an embodiment the process 200 can cease after block 208. The combined parsed form data can be output as the structured compliance form data without performing for the processing on the combined parsed form data, according to one embodiment.

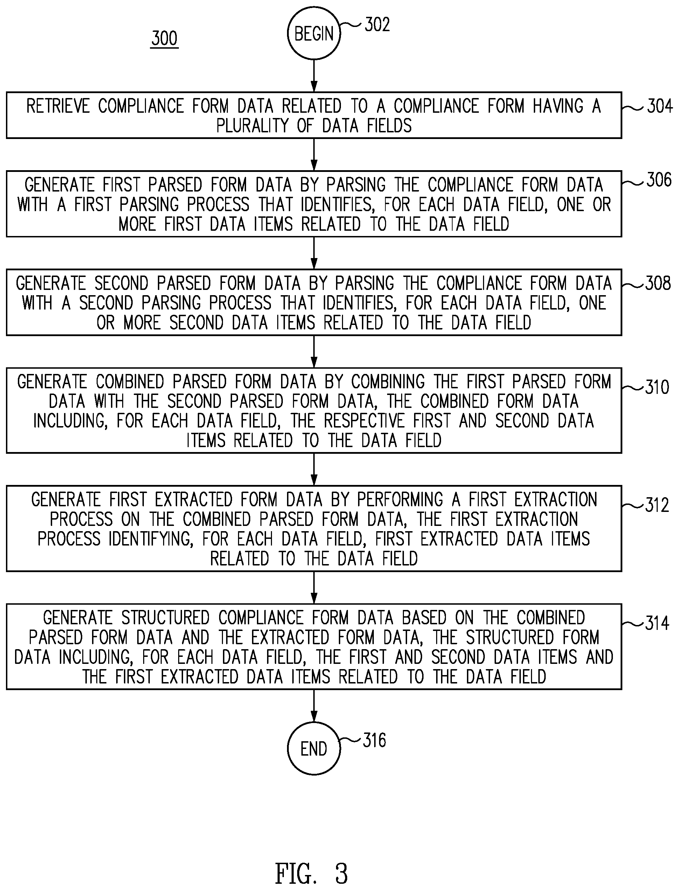

FIG. 3 illustrates a flow diagram of a process 300 for generating structured compliance form data, according to various embodiments.

In one embodiment, process 300 for generating structured compliance form data begins at BEGIN 302 and process flow proceeds to RETRIEVE COMPLIANCE FORM DATA RELATED TO A COMPLIANCE FORM HAVING A PLURALITY OF DATA FIELDS 304.

In one embodiment, at RETRIEVE COMPLIANCE FORM DATA RELATED TO A COMPLIANCE FORM HAVING A PLURALITY OF DATA FIELDS 304 process 300 for generating structured compliance form data retrieves compliance form data related to a compliance form having a plurality of data fields.

In one embodiment, once process 300 for generating structured compliance form data retrieves compliance form data related to a compliance form having a plurality of data fields at RETRIEVE COMPLIANCE FORM DATA RELATED TO A COMPLIANCE FORM HAVING A PLURALITY OF DATA FIELDS 304, process flow proceeds to GENERATE FIRST PARSED FORM DATA BY PARSING THE COMPLIANCE FORM DATA WITH A FIRST PARSING PROCESS THAT IDENTIFIES, FOR EACH DATA FIELD, ONE OR MORE FIRST DATA ITEMS RELATED TO THE DATA FIELD 306.

In one embodiment, at GENERATE FIRST PARSED FORM DATA BY PARSING THE COMPLIANCE FORM DATA WITH A FIRST PARSING PROCESS THAT IDENTIFIES, FOR EACH DATA FIELD, ONE OR MORE FIRST DATA ITEMS RELATED TO THE DATA FIELD 306, process 300 for generating structured compliance form data generates first parsed form data by parsing the compliance form data with a first parsing process that identifies, for each data field, one or more first data items related to the data field.

In one embodiment, once process 300 for generating structured compliance form data generates first parsed form data by parsing the compliance form data with a first parsing process that identifies, for each data field, one or more first data items related to the data field at GENERATE FIRST PARSED FORM DATA BY PARSING THE COMPLIANCE FORM DATA WITH A FIRST PARSING PROCESS THAT IDENTIFIES, FOR EACH DATA FIELD, ONE OR MORE FIRST DATA ITEMS RELATED TO THE DATA FIELD 306, process flow proceeds to GENERATE SECOND PARSED FORM DATA BY PARSING THE COMPLIANCE FORM DATA WITH A SECOND PARSING PROCESS THAT IDENTIFIES, FOR EACH DATA FIELD, ONE OR MORE SECOND DATA ITEMS RELATED TO THE DATA FIELD 308.

In one embodiment, at GENERATE SECOND PARSED FORM DATA BY PARSING THE COMPLIANCE FORM DATA WITH A SECOND PARSING PROCESS THAT IDENTIFIES, FOR EACH DATA FIELD, ONE OR MORE SECOND DATA ITEMS RELATED TO THE DATA FIELD 308, process 300 for generating structured compliance form data generates second parsed form data by parsing the compliance form data with a second parsing process that identifies, for each data field, one or more second data items related to the data field.

In one embodiment, once process 300 for generating structured compliance form data generates second parsed form data by parsing the compliance form data with a second parsing process that identifies, for each data field, one or more second data items related to the data field at GENERATE SECOND PARSED FORM DATA BY PARSING THE COMPLIANCE FORM DATA WITH A SECOND PARSING PROCESS THAT IDENTIFIES, FOR EACH DATA FIELD, ONE OR MORE SECOND DATA ITEMS RELATED TO THE DATA FIELD 308, process flow proceeds to GENERATE COMBINED PARSED FORM DATA BY COMBINING THE FIRST PARSED FORM DATA WITH THE SECOND PARSED FORM DATA, THE COMBINED FORM DATA INCLUDING, FOR EACH DATA FIELD, THE RESPECTIVE FIRST AND SECOND DATA ITEMS RELATED TO THE DATA FIELDON THE CATEGORIES 310.

In one embodiment, at GENERATE COMBINED PARSED FORM DATA BY COMBINING THE FIRST PARSED FORM DATA WITH THE SECOND PARSED FORM DATA, THE COMBINED FORM DATA INCLUDING, FOR EACH DATA FIELD, THE RESPECTIVE FIRST AND SECOND DATA ITEMS RELATED TO THE DATA FIELDON THE CATEGORIES 310, process 300 for generating structured compliance form data generates combined parsed form data by combining the first parsed form data with the second parsed form data, the combined form data including, for each data field, the respective first and second data items related to the data field on the categories.

In one embodiment, once process 300 for generating structured compliance form data generates combined parsed form data by combining the first parsed form data with the second parsed form data, the combined form data including, for each data field, the respective first and second data items related to the data field on the categories at GENERATE COMBINED PARSED FORM DATA BY COMBINING THE FIRST PARSED FORM DATA WITH THE SECOND PARSED FORM DATA, THE COMBINED FORM DATA INCLUDING, FOR EACH DATA FIELD, THE RESPECTIVE FIRST AND SECOND DATA ITEMS RELATED TO THE DATA FIELDON THE CATEGORIES 310, process flow proceeds to GENERATE FIRST EXTRACTED FORM DATA BY PERFORMING A FIRST EXTRACTION PROCESS ON THE COMBINED PARSED FORM DATA, THE FIRST EXTRACTION PROCESS IDENTIFYING, FOR EACH DATA FIELD, FIRST EXTRACTED DATA ITEMS RELATED TO THE DATA FIELD 312.

In one embodiment, at GENERATE FIRST EXTRACTED FORM DATA BY PERFORMING A FIRST EXTRACTION PROCESS ON THE COMBINED PARSED FORM DATA, THE FIRST EXTRACTION PROCESS IDENTIFYING, FOR EACH DATA FIELD, FIRST EXTRACTED DATA ITEMS RELATED TO THE DATA FIELD 312 the process 300 generates first extracted form data by performing a first extraction process on the combined parsed form data, the first extraction process identifying, for each data field, first extracted data items related to the data field.

In one embodiment, once process 300 generates first extracted form data by performing a first extraction process on the combined parsed form data, the first extraction process identifying, for each data field, first extracted data items related to the data field at GENERATE FIRST EXTRACTED FORM DATA BY PERFORMING A FIRST EXTRACTION PROCESS ON THE COMBINED PARSED FORM DATA, THE FIRST EXTRACTION PROCESS IDENTIFYING, FOR EACH DATA FIELD, FIRST EXTRACTED DATA ITEMS RELATED TO THE DATA FIELD 312, process flow proceeds to GENERATE STRUCTURED COMPLIANCE FORM DATA BASED ON THE COMBINED PARSED FORM DATA AND THE EXTRACTED FORM DATA, THE STRUCTURED FORM DATA INCLUDING, FOR EACH DATA FIELD, THE FIRST AND SECOND DATA ITEMS AND THE FIRST EXTRACTED DATA ITEMS RELATED TO THE DATA FIELD 314.

In one embodiment, at GENERATE STRUCTURED COMPLIANCE FORM DATA BASED ON THE COMBINED PARSED FORM DATA AND THE EXTRACTED FORM DATA, THE STRUCTURED FORM DATA INCLUDING, FOR EACH DATA FIELD, THE FIRST AND SECOND DATA ITEMS AND THE FIRST EXTRACTED DATA ITEMS RELATED TO THE DATA FIELD 314 the process 300 for generating structured compliance form data generates structured compliance form data based on the combined parsed form data and the extracted form data, the structured form data including, for each data field, the first and second data items and the first extracted data items related to the data field.

In one embodiment, once the process 300 for generating structured compliance form data generates structured compliance form data based on the combined parsed form data and the extracted form data, the structured form data including, for each data field, the first and second data items and the first extracted data items related to the data field at GENERATE STRUCTURED COMPLIANCE FORM DATA BASED ON THE COMBINED PARSED FORM DATA AND THE EXTRACTED FORM DATA, THE STRUCTURED FORM DATA INCLUDING, FOR EACH DATA FIELD, THE FIRST AND SECOND DATA ITEMS AND THE FIRST EXTRACTED DATA ITEMS RELATED TO THE DATA FIELD 314, process flow proceeds to END 316.

In one embodiment, at END 316 the process for generating structured compliance form data is exited to await new data or instructions.

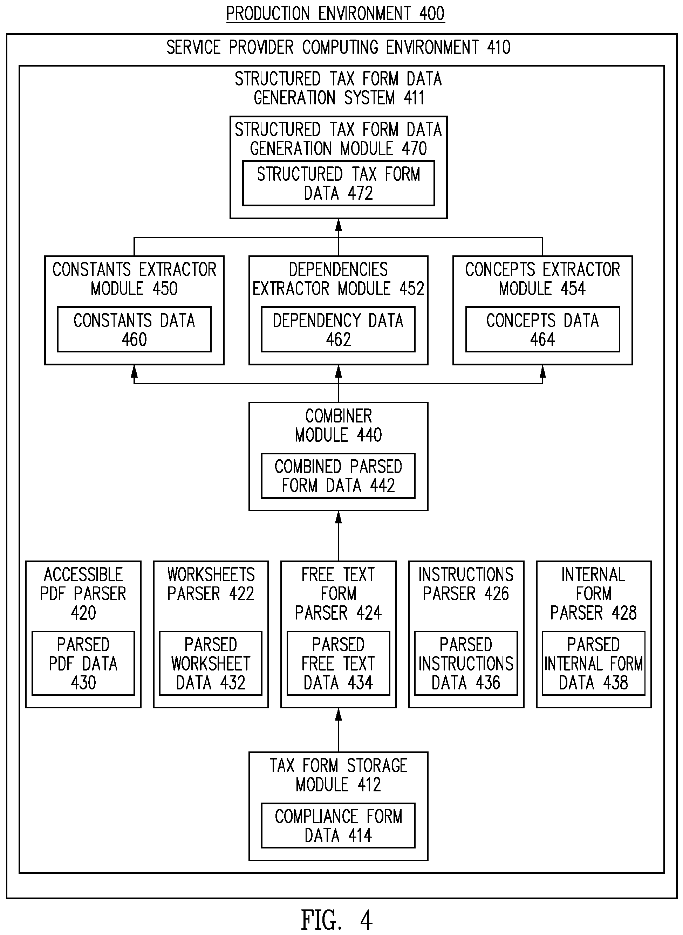

FIG. 4 illustrates a block diagram of a production environment 400 for generating structured compliance form data, according to one embodiment.

The production environment 400 includes a service provider computing environment 410. The service provider computing environment 410 includes a structured tax form data generation system 411 configured to provide tax form generation services for tax return preparation systems that assist users in electronically filling out compliance forms.

According to an embodiment, the structured tax form data generation system 411 can automatically extract information from various compliance forms and represent the information in a structured, machine-readable format. Principles of the tax form data generation system 411 can be extended to other compliance form domains, such as payroll or other fields in which compliance forms are utilized.

The IRS publishes tax forms and other regulatory information in different formats like accessible PDFs, free text forms and instruction SGMLs. The tax form data generation system 411 constructs a consolidated structured representation from these varied tax form formats. The tax form data generation system 411 extracts various attributes of tax forms such as lines, line description, input fields, field types, tables, checkboxes, embedded tables, instructions, worksheets etc. The tax form data generation system 411 utilizes a set of parsing modules and grammar for each parsing module, which is used to extract information from tax forms. parsing modules can be implemented for each format of the tax form (e.g. accessible PDF, free text form, SGML, etc.). Grammar for these parsing modules are defined externally and are easily configurable to address possible changes to the tax form structure. Each of the parsing modules works on the respective source forms and generates corresponding parsed form data. The parsing modules extract the various data items or attributes available in a form such as line number, line description, field numbers, field descriptions, tables, embedded tables, checkboxes, instructions etc. Each parsing module generates parsed form data for all input forms of a respective format. For example, if there are accessible PDFs and text forms available as sources, the tax form data generation system 411 includes a corresponding accessible PDF parser and a free text form parser. Specific references to the IRS herein, can alternatively be applied to other government tax agencies such as state tax agencies or government tax agencies in other nations.

The structured tax form data generation system 411 includes a tax form storage module 412, an accessible PDF parser 420, a worksheets parser 422, a free text form parser 424, an IRS instructions parser 426, an internal form parser 428, a combiner module 440, a constants extractor module 450, a dependencies extractor module 452, a concepts extractor module 454, and a structured tax form generation module 470, according to one embodiment.

According to one embodiment, the tax form storage module 412 includes tax form data 414. The tax form data 414 can include data related to one or more visual versions of the tax form. These visual versions of the tax form can include a PDF version of the tax form, a free text version of the tax form, an image of the tax form, an accessible PDF version of the tax form, or other versions of the tax form that are structured to be readable by a human.

In one embodiment, the tax form data 414 can include data related to instructions for filling out the tax form. The instructions can include one or more separate instruction documents provided by a government agency that issued the tax form. The instructions can also include an internal instructions form generated by an electronic tax return preparation system related to the structured tax form data generation system 411.

In one embodiment, the tax form data 414 can include worksheets related to filling out the tax form. The worksheets can include agency worksheets provided by the IRS, a state government agency, or another government agency. The worksheets can also include internal worksheets generated and used by an electronic tax return preparation system related to the structured tax form data generation system 411.

In one embodiment, the tax form data 414 can include current or previous software instructions used by an electronic tax return preparation system in assisting users to fill out electronic tax forms.

In one embodiment, the tax form data 414 can include data related to other tax forms that may be referenced by or otherwise related to the tax form.

In one embodiment, an agency that issued the tax form can also set forth standard names for the data fields or lines in the tax form as well as the data fields or lines of other tax forms related to the tax form. The agency can also set forth standard names for the tax forms themselves. The tax form data 414 can include data related to the agency names.

In one embodiment, an electronic tax return preparation system can also include one or more internally used names for the various tax forms, the lines or data fields in the tax forms, and other data items related to the lines and data fields of the tax forms. The tax form data 414 can include data related to the internal names.

In one embodiment, the various internal and agency names for the various tax forms, lines of the tax forms, data fields of the tax forms, etc. are used as variables in the software instructions utilized by an electronic tax return preparation system in assisting users to fill out electronic tax forms.

In one embodiment, the accessible PDF parser 420 analyzes an accessible PDF and identifies data items related to various lines or data fields of the tax form and generates parsed form data 430 listing the data items associated with each line or data field of the tax form that were identified by the accessible PDF parsing process.

According to an embodiment, the IRS publishes tax forms in an accessible PDF format. A document or application is considered accessible if it meets certain technical criteria and can be used by people with disabilities. This includes access by people who are mobility impaired, blind, low vision, deaf, hard of hearing, or who have cognitive impairments. The accessible PDF parser 420 analyzes the accessible PDF version of the tax form and extracts data items such as parts/sections, line numbers, line descriptions, associated fields, field numbers, sub fields for a line, tables, etc.

In one embodiment, the PDF parser 420 converts the accessible PDF to an intermediate accessible format. The intermediate output has information about all the input fields of the PDF. The accessible PDF parser 420 analyzes the intermediate accessible format to extract data items such as part number, description, line number, line description, field number, field description, subfields, tables, invariants such as number of copies of the form, cardinalities such as number of repeating rows for a line. In one embodiment, the grammar for the parsed PDF data 430 is defined externally and is used by the accessible PDF parser 420.

According to an embodiment, the IRS also provides tax forms in a free text format. The free text form parser 424 analyzes the free text form version of the tax form to extract data items such as parts, line numbers, line descriptions, associated fields, field numbers, subfields for a line, tables, data tables, checkboxes etc. The free text form parser 424 generates parsed free text data 434 including these data items.

According to an embodiment, the IRS publishes instructions for a tax form in a separate SGML format. The instructions parser 426 analyzes the instructions SGML and parses the SGML to extract data items such as instructions and corresponding line numbers. The instructions parser 426 generates parsed instructions data 436 that includes the instructions and the line numbers related to the instructions.

In one embodiment, the IRS publishes worksheets for tax forms. Worksheets are similar to a tax form and can include parts, lines, line numbers, descriptions, fields, etc. In addition to these attributes, worksheets may also contain steps, checklists, sections etc. Worksheets are often associated with a line of the tax form. The worksheets are sometimes part of the instruction SGML. However, in some cases the worksheets may also be part of the regional tax form and a may be represented in the accessible PDF form with the free text.

According to an embodiment, the structured tax form data generation system 411 can include multiple worksheets parsing modules 422 configured to generate parsed worksheet data 432 based on different types worksheets. Parsed worksheet data 432 can include data items extracted from the worksheets including checklists, title of the worksheet, parts, part numbers, part descriptions, line descriptions, line numbers, fields, etc.

In one embodiment, the tax return preparation system may create internal forms and worksheets to make tax calculations easier. Internal forms can be extensions of the IRS forms can be completely new and internal to the tax return preparation system. In one embodiment, the internal forms and worksheets can be represented in an XML form and can have information about all of the lines, data fields, variables related to internal names for the lines, data fields, form names, and other parts of a tax form.

According to an embodiment, the internal form parser 428 analyzes the internal forms and worksheets in order to generate parsed internal form data 438. The parsed internal form data 438 can include data items such as form IDs, internal names, field types, descriptions, part numbers, field IDs, field types, etc.

In one embodiment, when the various parser modules 420, 422, 424, 426, and 428 have generated the various parsed form data 430, 432, 434, 436, and 438, the combiner module 440 merges data items from these parsed form data and generates the combined parsed form data 442.

According to an embodiment, the combiner module 440 uses a configuration file to merge the parsed form data into a structured format. In one example, a data item 'X' is present in the multiple of the parsed form data 430, 432, 434, 436, and 438. During the merging process, the combiner module 440 picks the value of attribute 'X' from one of the parsed form data. In one embodiment, the structured tax form data generation system 411 can apply machine learning to validate the accuracy of the extraction. When the structured tax form data generation system 411 validates the accuracy, if the value of attribute 'X' is wrong in most of the cases, the structured tax form data generation system 411 can change its configuration dynamically and extract 'X' from the parsed form data generated by another of the parser modules.

According to an embodiment, the combiner module 440 specifies which parsed form data should be used for providing a data item for the final representation of the tax form.

According to an embodiment, in addition to capturing information available in tax forms provided by regulatory bodies, the structured tax form data generation system 411 can include variable names that can come from a family of data models. These mappings can be from the line input fields to the variable name representations of these fields in another data model.

In one embodiment, one or more of the parsing modules 420, 422, 424, 426, and 428, or other parsing modules not described herein, analyze tax form data 414 including both internal variable names and agency generated variable names. The internal form parser 428, or another of the parsing modules, can analyze tax form data 414 related to internal forms or internal data related to the tax form in order to identify the various internal names for tax forms, data fields, lines, and other aspects of the tax form that may carry internal naming conventions. One or more of the other parser modules, identifies the various agency names for tax forms, data fields lines, and other aspects of the tax form that may carry agency naming conventions. In one embodiment, the combiner module 440 generates combined parsed form data 442 that maps the various internal and agency variable names to each other. Thus, the combined parsed form data 442 can include, for a given line or data field of the tax form, the variable names related to the line or data field from the various internal naming conventions and the agency naming conventions.

In one embodiment, the combiner module 440 populates various variables in the combined parsed tax form data 442. For non-tabular lines, the combiner module 440 gets internal field type variable names from an internal form if the mapped status is indicated and there is a matching record for this line. The combiner module 440 maps the various internal names in a JSON output. If the line type is a table, then the combiner module gets the table identification from the internal form. The combiner module then goes to field info XML and using the table ID, extracts variable names, positions, and field type of each of the columns in the table along with the data type. To get other internal variable names, if any, the combiner module 440 looks up the other internal variable names in internal forms (within the same table ID and that there is an exact match, then take it). The combiner module maps the various field info internal variables in the final JSON output. In one embodiment, if a line has only one field then the combiner module gets agency variable names and field types from the tax model output by matching the line numbers. If there are multiple records for a line in the tax model output, then the combiner module 440 matches on the basis of field part, position, etc. If an entry in a tax model has field info position, then the combiner module gives priority to the tax model. If a full-line number matches the network, then the combiner module 440 to the parcel match of the line number in the tax model output. The combiner module 440 maps the various agency variable names in the JSON output. The combiner module 440 gets the value of an agency-to-internal name variable from a matched tax model Otherwise the combiner module 440 gets the value of internal variable names from the extracted tax model and maps it to an agency-to-internal variable name. The combiner module also looks for extracted agency variables inside the field info output and if there is a matching record then the combiner module populates internal variables and field info variables. The combiner module 440 gets the agency name variables from a tax model and stores them agency name variables in the combined parsed tax form data 442. The combiner module 442 populates internal variable names from different sources. In one example, if the primary tool output has an internal variable name identification then the combiner module 440 sets the internal variable name identification from the primary tool. If the primary tool output does not have the internal variable name but the tax model does, then the combiner module 440 sets the internal variable name from the tax model output. If neither the primary tool nor the tax model have the internal variable name but the field info output does, then the combiner module 440 sets the internal variable name from the field info output.

According to an embodiment, it can be important to know the relationships between entities in the knowledge representation. Accordingly, the structured tax form data generation system 411 can apply different techniques for pattern-based approaches and natural language processing to determine the relationship among the lines in a tax form and between tax forms themselves. In the natural language processing approach, the structured tax form data generation system 411 interprets the semantic meaning of the section of the tax form line to get relationships among forms. In structuring the tax forms, the structured tax form data generation system 411 extracts, as dependencies, references between tax forms as a first level of relationship extraction. In addition to the dependencies, the structured tax form data generation system 411 extracts constants and concepts related to a line or data field of a tax form.

In one embodiment, the constants extractor module 450 is configured to identify, for each data field of the tax form, constants related to the lines or data fields of the tax form. The combined parsed form data 442 may include a text description of a particular line or data field of the tax form. The constants extractor module can analyze the text description of the particular line or data field and can identify one or more specific dollar amounts listed in the text description of the line or data field. The dollar amounts are constants that are likely to factor into an appropriate function for generating a data value for the wine or data field.

In one embodiment, the dependencies extractor module 452 is configured to identify, for each data field of the tax form, dependencies related to the lines or data fields of the tax form and to generate dependency data 462 identifying the dependencies. In one example, the combined parsed form data 442 may include a text description of a particular line or data field of the tax form. The dependencies extractor module 452 can analyze the text description of the particular line or data field and can identify one or more references to other lines in the tax form or other lines and other tax forms listed in the text description of the line or data field. These references to other lines or data fields in the tax form or other worksheets or tax forms are dependencies on which an appropriate function for generating a data value for the line or data field is likely to depend. The second dependency data 462 lists the dependencies for each line or data field of the tax form.

In one embodiment, the concepts extractor module 454 is configured to identify concepts related to the lines or data fields of the tax form and to generate concepts data 464 identifying the concepts. In one example, the combined parsed form data 442 may include a reference to a particular tax topic or tax concept, e.g. charitable contribution deductions. The concepts extractor module 454 identifies and lists the concepts related to each line or data field of the tax form.

In one embodiment, the structured tax form data generation system 411 does not include any extractor modules, in which case, the structured tax form data 472 may simply be the combined parsed form data 442. In one embodiment, one or more of the extractor modules act as parsing modules that combine their generated data with the parsed form data 430, 432, 434 to generate the combined parsed form data 442. Those of skill in the art will recognize, in light of the present disclosure, that many other configurations of the various modules are possible and that modules other than those shown can be included in a structured tax form data generation system 411.

In one embodiment, the structured tax form data generation system 411 utilizes the structured tax form generation module 470 to generate structured tax form data 472. The structured tax form data 472 includes, for each line or data field of the tax form, the data items identified by the various parsing modules and extractor modules. The structured form generation module 470 can then combine the first, second, and third extracted form data 460, 462, 464 with the combined parsed form data 442 to generate the structured tax form data 472. The structured tax form data 472 can be in a same format as the combined parsed form data 442, e.g. a JSON. Alternatively, the structured tax form data 472 can be in a different format from the data combined parsed form data 442.

According to an embodiment, the structured tax form data generation module 470 is or includes the combiner module 440. In one embodiment, the combiner module 440 may perform the operations ascribed to the structured tax form data generation module 470 herein.

In one embodiment, the structured tax form data 472 corresponds to a structured version of the tax form. The structured tax form data 472 is in a machine-readable format that can be easily analyzed by a tax form preparation system in order to determine the appropriate function for generating proper data values for each line or data field of the tax form. In this way, the structured tax form data generation system 411 enable the efficient incorporation of tax forms into a tax form preparation system that assists users in electronically filling out tax forms.

According to an embodiment, the structured tax form data generation system 411 can also identify whether a line or data field of the tax form expects calculation based on a specific function, whether the line or data field expect a user contributed input.

As noted above, the specific illustrative examples discussed above are but illustrative examples of implementations of embodiments of the method or process for generating structured compliance form data. Those of skill in the art will readily recognize that other implementations and embodiments are possible. Therefore, the discussion above should not be construed as a limitation on the claims provided below.

In one embodiment, a computing system implemented method generates structured compliance form data. The method includes retrieving compliance form data related to a compliance form having a plurality of data fields, generating first parsed form data by parsing the compliance form data with a first parsing process that identifies, for each data field, one or more first data items related to the data field, and generating second parsed form data by parsing the compliance form data with a second parsing process that identifies, for each data field, one or more second data items related to the data field. The method also includes generating combined parsed form data by combining the first parsed form data with the second parsed form data, the combined form data including, for each data field, the respective first and second data items related to the data field, generating first extracted form data by performing a first extraction process on the combined parsed form data, the first extraction process identifying, for each data field, first extracted data items related to the data field, and generating structured compliance form data based on the combined parsed form data and the extracted form data, the structured form data including, for each data field, the first and second data items and the first extracted data items related to the data field.

In one embodiment, a computing system implemented method generates structured compliance form data. The method includes retrieving compliance form data related to a compliance form having a plurality of data fields, generating first parsed form data by parsing the compliance form data with a first parsing process that identifies, for each data field, one or more first data items related to the data field, and generating second parsed form data by parsing the compliance form data with a second parsing process that identifies, for each data field, one or more second data items related to the data field. The method also includes generating combined parsed form data by combining the first parsed form data with the second parsed form data, the combined form data including, for each data field, the respective first and second data items related to the data field.

One embodiment is a non-transitory computer-readable medium having a plurality of computer-executable instructions which, when executed by a processor, perform a method for generating structured compliance form data. The instructions include a compliance form storage module configured to store compliance for data related to a compliance form having a plurality of data fields that expect data values in accordance with specified functions. The instructions also include a first parsing module configured to generate first parsed form data by parsing the compliance form data with a first parsing process that identifies, for each data field, one or more first data items related to the data field. The instructions also include a second parsing module configured to generate second parsed form data by parsing the compliance form data with a second parsing process that identifies, for each data field, one or more second data items related to the data field. The instructions also include a combiner module configured to generate combined parsed form data by combining the first parsed form data with the second parsed form data, the combined form data including, for each data field, the respective first and second data items related to the data field.

One embodiment is a system for generating structured compliance form data. The system includes at least one processor and at least one memory coupled to the at least one processor, the at least one memory having stored therein instructions which, when executed by any set of the one or more processors, perform a process. The process includes retrieving, with a compliance for storage module of a computing system, compliance form data related to a compliance form having a plurality of data fields, generating, with a first parsing module of a computing system, first parsed form data by parsing the compliance form data with a first parsing process that identifies, for each data field, one or more first data items related to the data field, and generating, with a second parsing module of a computing system, second parsed form data by parsing the compliance form data with a second parsing process that identifies, for each data field, one or more second data items related to the data field. The process also includes generating, with a combiner module of a computing system, combined parsed form data by combining the first parsed form data with the second parsed form data, the combined form data including, for each data field, the respective first and second data items related to the data field. The process also includes generating, with a first extractor module of a computing system, first extracted form data by performing a first extraction process on the combined parsed form data, the first extraction process identifying, for each data field, first extracted data items related to the data field. The process also includes generating, with a structured compliance form data generation module of a computing system, structured compliance form data based on the combined parsed form data and the extracted form data, the structured form data including, for each data field, the first and second data items and the first extracted data items related to the data field.

In the discussion above, certain aspects of one embodiment include process steps, operations, or instructions described herein for illustrative purposes in a particular order or grouping. However, the particular orders or groupings shown and discussed herein are illustrative only and not limiting. Those of skill in the art will recognize that other orders or groupings of the process steps, operations, and instructions are possible and, in some embodiments, one or more of the process steps, operations and instructions discussed above can be combined or deleted. In addition, portions of one or more of the process steps, operations, or instructions can be re-grouped as portions of one or more other of the process steps, operations, or instructions discussed herein. Consequently, the particular order or grouping of the process steps, operations, or instructions discussed herein do not limit the scope of the invention as claimed below.

As discussed in more detail above, using the above embodiments, with little or no modification or input, there is considerable flexibility, adaptability, and opportunity for customization to meet the specific needs of various parties under numerous circumstances.

In the discussion above, certain aspects of one embodiment include process steps, operations, or instructions described herein for illustrative purposes in a particular order or grouping. However, the particular order or grouping shown and discussed herein are illustrative only and not limiting. Those of skill in the art will recognize that other orders and groupings of the process steps, operations, or instructions are possible and, in some embodiments, one or more of the process steps, operations, or instructions discussed above can be combined or deleted. In addition, portions of one or more of the process steps, operations, or instructions can be re-grouped as portions of one or more other of the process steps, operations, or instructions discussed herein. Consequently, the particular order or grouping of the process steps, operations, or instructions discussed herein do not limit the scope of the invention as claimed below.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, or protocols. Further, the system or functionality of the invention may be implemented via various combinations of software and hardware, as described, or entirely in hardware elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Some portions of the above description present the features of the present invention in terms of algorithms and symbolic representations of operations, or algorithm-like representations, of operations on information/data. These algorithmic or algorithm-like descriptions and representations are the means used by those of skill in the art to most effectively and efficiently convey the substance of their work to others of skill in the art. These operations, while described functionally or logically, are understood to be implemented by computer programs or computing systems. Furthermore, it has also proven convenient at times to refer to these arrangements of operations as steps or modules or by functional names, without loss of generality.

Unless specifically stated otherwise, as would be apparent from the above discussion, it is appreciated that throughout the above description, discussions utilizing terms such as, but not limited to, "activating", "accessing", "adding", "aggregating", "alerting", "applying", "analyzing", "associating", "calculating", "capturing", "categorizing", "classifying", "comparing", "creating", "defining", "detecting", "determining", "distributing", "eliminating", "encrypting", "extracting", "filtering", "forwarding", "generating", "identifying", "implementing", "informing", "monitoring", "obtaining", "posting", "processing", "providing", "receiving", "requesting", "saving", "sending", "storing", "substituting", "transferring", "transforming", "transmitting", "using", etc., refer to the action and process of a computing system or similar electronic device that manipulates and operates on data represented as physical (electronic) quantities within the computing system memories, resisters, caches or other information storage, transmission or display devices.

The present invention also relates to an apparatus or system for performing the operations described herein. This apparatus or system may be specifically constructed for the required purposes, or the apparatus or system can comprise a general purpose system selectively activated or configured/reconfigured by a computer program stored on a computer program product as discussed herein that can be accessed by a computing system or another device.

Those of skill in the art will readily recognize that the algorithms and operations presented herein are not inherently related to any particular computing system, computer architecture, computer or industry standard, or any other specific apparatus. Various general purpose systems may also be used with programs in accordance with the teaching herein, or it may prove more convenient/efficient to construct more specialized apparatuses to perform the required operations described herein. The required structured for a variety of these systems will be apparent to those of skill in the art, along with equivalent variations. In addition, the present invention is not described with reference to any particular programming language and it is appreciated that a variety of programming languages may be used to implement the teachings of the present invention as described herein, and any references to a specific language or languages are provided for illustrative purposes only and for enablement of the contemplated best mode of the invention at the time of filing.

The present invention is well suited to a wide variety of computer network systems operating over numerous topologies. Within this field, the configuration and management of large networks comprise storage devices and computers that are communicatively coupled to similar or dissimilar computers and storage devices over a private network, a LAN, a WAN, a private network, or a public network, such as the Internet.

It should also be noted that the language used in the specification has been principally selected for readability, clarity and instructional purposes, and may not have been selected to delineate or circumscribe the inventive subject matter. Accordingly, the disclosure of the present invention is intended to be illustrative, but not limiting, of the scope of the invention, which is set forth in the claims below.

In addition, the operations shown in the FIG.s, or as discussed herein, are identified using a particular nomenclature for ease of description and understanding, but other nomenclature is often used in the art to identify equivalent operations.

Therefore, numerous variations, whether explicitly provided for by the specification or implied by the specification or not, may be implemented by one of skill in the art in view of this disclosure.

## Claims

1. A computing system implemented method for generating structured compliance form data, the method comprising:
retrieving compliance form data related to a compliance form having a plurality of data fields, wherein the compliance form data includes a plurality of types of data related to the compliance form;
generating first parsed form data by parsing the compliance form data with a first parsing process that identifies, for each data field, one or more first data items related to the data field, wherein generating the first parsed form data includes parsing a first type of data of the plurality of types of data to identify the one or more first data items;
generating second parsed form data by parsing the compliance form data with a second parsing process that identifies, for each data field, one or more second data items related to the data field, wherein generating the second parsed form data includes parsing a second type of data of the plurality of types of data to identify the one or more second data items;
generating combined parsed form data by combining the first parsed form data with the second parsed form data, the combined form data including, for each data field, the respective first and second data items related to the data field;
generating first extracted form data by performing a first extraction process on the combined parsed form data, the first extraction process identifying, for each data field, first extracted data items related to the data field; and
generating structured compliance form data based on the combined parsed form data and the extracted form data, the structured form data including, for each data field, the first and second data items and the first extracted data items related to the data field.

2. The method of claim 1, wherein the combined parsed form data is machine-readable.

3. The method of claim 1, further comprising generating third parsed form data by parsing the compliance form data with a third parsing process that identifies, for each data field, third data items related to the data field.

4. The method of claim 1, wherein the compliance form data includes:
i) free text form data related to a free text version of the compliance form; or
ii) accessible PDF data related to an accessible PDF version of the compliance form; or
iii) internal form data related to one or more internal forms associated with the compliance form; or
iv) worksheets data related to the compliance form.

5. The method of claim 4, wherein the first or second parsing process includes:
i) parsing the free text form data; or
ii) parsing the accessible PDF data; or
iii) parsing the internal form data; or
iv) parsing the worksheets data.

6. The method of claim 1, wherein the compliance form data includes agency instructions data related to instructions provided by an agency that issued the compliance form.

7. The method of claim 1, wherein the first or second parsing process includes parsing the agency instructions data.

8. The method of claim 1, wherein the first extraction process includes identifying, for each data field and from the combined parsed form data, one or more dependencies for generating a proper data value for the data field, wherein a proper data value is a data value that corresponds to an expected input to the data field, and optionally:
wherein the structured compliance form data includes, for each data field, the one or more dependencies for generating a proper data value for the data field.

9. The method of claim 1, wherein the first extraction process includes identifying, for each data field and from the combined parsed form data, one or more constants for generating a proper data value for the data field, wherein a proper data value is a data value that corresponds to an expected input to the data field; and optionally:
wherein the structured compliance form data indicates, for each data field, the one or more constants for generating a proper data value for the data field.

10. The method of claim 1, wherein the first extraction process includes identifying, for each data field and from the combined parsed form data, one or more concepts related to the data field; and optionally:
wherein the structured compliance form data indicates, for each data field, the one or more concepts related to the data field.

11. A non-transitory computer-readable medium having a plurality of computer-executable instructions which, when executed by a processor, perform a method for generating structured compliance form data, the instructions comprising:
a compliance form storage module configured to store compliance for data related to a compliance form having a plurality of data fields that expect data values in accordance with specified functions, wherein the compliance form data includes a plurality of types of data related to the compliance form;
a first parsing module configured to generate first parsed form data by parsing the compliance form data with a first parsing process that identifies, for each data field, one or more first data items related to the data field, wherein generating the first parsed form data includes parsing a first type of data of the plurality of types of data to identify the one or more first data items;
a second parsing module configured to generate second parsed form data by parsing the compliance form data with a second parsing process that identifies, for each data field, one or more second data items related to the data field, wherein generating the second parsed form data includes parsing a second type of data of the plurality of types of data to identify the one or more second data items; and
a combiner module configured to:
generate combined parsed form data by combining the first parsed form data with the second parsed form data, the combined form data including, for each data field, the respective first and second data items related to the data field;
generate first extracted form data by performing a first extraction process on the combined parsed form data, the first extraction process identifying, for each data field, first extracted data items related to the data field; and
generate structured compliance form data based on the combined parsed form data and the extracted form data, the structured form data including, for each data field, the first and second data items and the first extracted data items related to the data field.

12. The non-transitory computer-readable medium of claim 11, wherein the instructions include:
a first extractor module configured to generate extracted form data by performing an extraction process on the combined parsed form data, the first extraction process identifying, for each data field, extracted data items related to the data field; and
generating structured compliance form data based on the combined parsed form data and the extracted form data, the structured form data including, for each data field, the first and second data items and the first extracted data items related to the data field.

13. The non-transitory computer-readable medium of claim 11, wherein the instructions include a third parsing module configured to generate third parsed form data by parsing the compliance form data with a third parsing process that identifies, for each data field, third data items related to the data field.

14. The non-transitory computer-readable medium of claim 13, wherein generating the combined form data includes combining the third parsed form data with the first and second parsed form data.

15. The non-transitory computer-readable medium of claim 11, wherein the first parsing module includes an accessible PDF parsing module configured to parse an accessible PDF related to the compliance form.

16. The non-transitory computer-readable medium of claim 11, wherein the second parsing module includes a free text form parsing module configured to parse a free text form related to the compliance form.

17. A system for generating structured compliance form data, the system comprising:
at least one processor; and
at least one memory coupled to the at least one processor, the at least one memory having stored therein instructions which, when executed by any set of the one or more processors, perform a process including:
retrieving, with a compliance for storage module of a computing system, compliance form data related to a compliance form having a plurality of data fields, wherein the compliance form data includes a plurality of types of data related to the compliance form;
generating, with a first parsing module of a computing system, first parsed form data by parsing the compliance form data with a first parsing process that identifies, for each data field, one or more first data items related to the data field, wherein generating the first parsed form data includes parsing a first type of data of the plurality of types of data to identify the one or more first data items;
generating, with a second parsing module of a computing system, second parsed form data by parsing the compliance form data with a second parsing process that identifies, for each data field, one or more second data items related to the data field, wherein generating the second parsed form data includes parsing a second type of data of the plurality of types of data to identify the one or more second data items;
generating, with a combiner module of a computing system, combined parsed form data by combining the first parsed form data with the second parsed form data, the combined form data including, for each data field, the respective first and second data items related to the data field;
generating, with a first extractor module of a computing system, first extracted form data by performing a first extraction process on the combined parsed form data, the first extraction process identifying, for each data field, first extracted data items related to the data field; and
generating, with a structured compliance form data generation module of a computing system, structured compliance form data based on the combined parsed form data and the extracted form data, the structured form data including, for each data field, the first and second data items and the first extracted data items related to the data field.

18. The system of claim 17, wherein the process further includes generating second extracted form data by performing a second extraction process on the combined parsed form data, the second extraction process identifying, for each data field, second extracted data items related to the data field.

19. The system of claim 18, wherein the structured form data includes the second extracted data items.

20. The system of claim 19, wherein the compliance form is a tax form.

21. The system of claim 17, further comprising providing the structured compliance form data to an electronic compliance form preparation system.

22. The system of claim 21, further comprising generating, for one or more of the data fields, respective appropriate functions for providing proper data values for the one or more data fields based on the structured compliance form data, wherein a proper data value is a data value that corresponds to an expected input to the data field.

23. The system of claim 17, wherein generating the combined parsed form data includes mapping agency names related to the compliance form to internal names related to the compliance form, wherein the agency names include names issued by an agency that issued the compliance form and wherein the internal names include names issued by a compliance form preparation system.

## Patentansprüche

1. In einem Rechensystem implementiertes Verfahren zur Erzeugung von strukturierten Konformitätsformulardaten, wobei das Verfahren umfasst:
Abrufen von Konformitätsformulardaten in Bezug auf ein Konformitätsformular mit einer Vielzahl von Datenfeldern, wobei die Konformitätsformulardaten eine Vielzahl von Datentypen, die sich auf das Konformitätsformular beziehen, beinhalten;
Erzeugen erster analysierter Formulardaten durch Analysieren der Konformitätsformulardaten mit einem ersten Analysierprozess, der für jedes Datenfeld ein oder mehrere erste Datenobjekte identifiziert, die sich auf das Datenfeld beziehen, wobei das Erzeugen der ersten analysierten Formulardaten das Analysieren eines ersten Datentyps der Vielzahl von Datentypen umfasst, um die ein oder mehreren ersten Datenobjekte zu identifizieren;
Erzeugen zweiter analysierter Formulardaten durch Analysieren der Konformitätsformulardaten mit einem zweiten Analysierprozess, der für jedes Datenfeld ein oder mehrere zweite Datenobjekte identifiziert, die sich auf das Datenfeld beziehen, wobei das Erzeugen der zweiten analysierten Formulardaten das Analysieren eines zweiten Datentyps der Vielzahl von Datentypen umfasst, um die ein oder mehreren zweiten Datenobjekte zu identifizieren;
Erzeugen kombinierter analysierter Formulardaten durch Kombinieren der ersten analysierten Formulardaten mit den zweiten analysierten Formulardaten, wobei die kombinierten Formulardaten für jedes Datenfeld die jeweiligen ersten und zweiten Datenobjekte beinhalten, die sich auf das Datenfeld beziehen;
Erzeugen erster extrahierter Formulardaten durch Ausführen eines ersten Extraktionsprozesses an den kombinierten analysierten Formulardaten, wobei der erste Extraktionsprozess für jedes Datenfeld erste extrahierte Datenobjekte identifiziert, die sich auf das Datenfeld beziehen; und
Erzeugen strukturierter Konformitätsformulardaten basierend auf den kombinierten analysierten Formulardaten und den extrahierten Formulardaten, wobei die strukturierten Formulardaten für jedes Datenfeld die ersten und zweiten Datenobjekte und die ersten extrahierten Datenobjekte beinhalten, die sich auf das Datenfeld beziehen.

2. Verfahren nach Anspruch 1, wobei die kombinierten analysierten Formulardaten maschinenlesbar sind.

3. Verfahren nach Anspruch 1, ferner umfassend das Erzeugen von dritten analysierten Formulardaten durch Analysieren der Konformitätsformulardaten mit einem dritten Analysierprozess, der für jedes Datenfeld dritte Datenobjekte identifiziert, die sich auf das Datenfeld beziehen.

4. Verfahren nach Anspruch 1, wobei die Konformitätsformulardaten beinhalten:
i) Daten von Freitextformularen, die sich auf eine Freitextversion des Konformitätsformulars beziehen; oder
ii) Daten von barrierefreien PDFs, die sich auf eine barrierefreie PDF-Version des Konformitätsformulars beziehen; oder
iii) interne Formulardaten, die sich auf ein oder mehrere mit dem Konformitätsformular verbundene interne Formulare beziehen; oder
iv) Arbeitsblattdaten, die sich auf das Konformitätsformular beziehen.

5. Verfahren nach Anspruch 4, wobei der erste oder zweite Analysierprozess beinhaltet:
i) Analysieren der Daten von Freitextformularen; oder
ii) Analysieren der Daten von barrierefreien PDFs; oder
iii) Analysieren der internen Formulardaten; oder
iv) Analysieren der Arbeitsblattdaten.

6. Verfahren nach Anspruch 1, wobei die Konformitätsformulardaten Anweisungsdaten einer Behörde beinhalten, die sich auf Anweisungen beziehen, die von einer Behörde bereitgestellt werden, die das Konformitätsformular ausgegeben hat.

7. Verfahren nach Anspruch 1, wobei der erste oder zweite Analysierprozess das Analysieren der Anweisungsdaten der Behörde beinhaltet.

8. Verfahren nach Anspruch 1, wobei der erste Extraktionsprozess beinhaltet, für jedes Datenfeld und aus den kombinierten analysierten Formulardaten eine oder mehrere Abhängigkeiten zur Erzeugung eines korrekten Datenwertes für das Datenfeld zu identifizieren, wobei ein korrekter Datenwert ein Datenwert ist, der einer erwarteten Eingabe in das Datenfeld entspricht, und optional:
wobei die strukturierten Konformitätsformulardaten für jedes Datenfeld die ein oder mehreren Abhängigkeiten zur Erzeugung eines korrekten Datenwertes für das Datenfeld beinhalten.

9. Verfahren nach Anspruch 1, wobei der erste Extraktionsprozess beinhaltet, für jedes Datenfeld und aus den kombinierten analysierten Formulardaten eine oder mehrere Konstanten zur Erzeugung eines korrekten Datenwertes für das Datenfeld zu identifizieren, wobei ein korrekter Datenwert ein Datenwert ist, der einer erwarteten Eingabe in das Datenfeld entspricht; und optional:
wobei die strukturierten Konformitätsformulardaten für jedes Datenfeld die ein oder mehreren Konstanten zur Erzeugung eines korrekten Datenwertes für das Datenfeld angeben.

10. Verfahren nach Anspruch 1, wobei der erste Extraktionsprozess für jedes Datenfeld und aus den kombinierten analysierten Formulardaten ein oder mehrere Konzepte identifiziert, die sich auf das Datenfeld beziehen; und optional:
wobei die strukturierten Konformitätsformulardaten für jedes Datenfeld die ein oder mehreren Konzepte angeben, die sich auf das Datenfeld beziehen.

11. Nichtflüchtiges computerlesbares Medium mit einer Vielzahl von computerausführbaren Anweisungen, die, wenn sie von einem Prozessor ausgeführt werden, ein Verfahren zum Erzeugen strukturierter Konformitätsformulardaten durchführen, wobei die Anweisungen umfassen:
ein Konformitätsformular-Speichermodul, das dafür ausgelegt ist, Konformitätsformulardaten zu speichern, die sich auf ein Konformitätsformular beziehen, das eine Vielzahl von Datenfeldern aufweist, für die Datenwerte gemäß spezifizierten Funktionen erwartet werden, wobei die Konformitätsformulardaten eine Vielzahl von Datentypen beinhalten, die sich auf das Konformitätsformular beziehen;
ein erstes Analysiermodul, das ausgelegt ist zum Erzeugen erster analysierter Formulardaten durch Analysieren der Konformitätsformulardaten mit einem ersten Analysierprozess, der für jedes Datenfeld ein oder mehrere erste Datenobjekte identifiziert, die sich auf das Datenfeld beziehen, wobei das Erzeugen der ersten analysierten Formulardaten das Analysieren eines ersten Datentyps der Vielzahl von Datentypen umfasst, um die ein oder mehreren ersten Datenobjekte zu identifizieren;
ein zweites Analysiermodul, das ausgelegt ist zum Erzeugen zweiter analysierter Formulardaten durch Analysieren der Konformitätsformulardaten mit einem zweiten Analysierprozess, der für jedes Datenfeld ein oder mehrere zweite Datenobjekte identifiziert, die sich auf das Datenfeld beziehen, wobei das Erzeugen der zweiten analysierten Formulardaten das Analysieren eines zweiten Datentyps der Vielzahl von Datentypen umfasst, um die ein oder mehreren zweiten Datenobjekte zu identifizieren; und
ein Kombiniermodul, das ausgelegt ist zum:
Erzeugen kombinierter analysierter Formulardaten durch Kombinieren der ersten analysierten Formulardaten mit den zweiten analysierten Formulardaten, wobei die kombinierten Formulardaten für jedes Datenfeld die jeweiligen ersten und zweiten Datenobjekte beinhalten, die sich auf das Datenfeld beziehen;
Erzeugen erster extrahierter Formulardaten durch Ausführen eines ersten Extraktionsprozesses an den kombinierten analysierten Formulardaten, wobei der erste Extraktionsprozess für jedes Datenfeld erste extrahierte Datenobjekte identifiziert, die sich auf das Datenfeld beziehen; und
Erzeugen strukturierter Konformitätsformulardaten basierend auf den kombinierten analysierten Formulardaten und den extrahierten Formulardaten, wobei die strukturierten Formulardaten für jedes Datenfeld die ersten und zweiten Datenobjekte und die ersten extrahierten Datenobjekte beinhalten, die sich auf das Datenfeld beziehen.

12. Nichtflüchtiges computerlesbares Medium nach Anspruch 11, wobei die Anweisungen beinhalten:
ein erstes Extrahiermodul ist ausgelegt zum Erzeugen erster extrahierter Formulardaten durch Ausführen eines Extraktionsprozesses an den kombinierten analysierten Formulardaten, wobei der erste Extraktionsprozess für jedes Datenfeld extrahierte Datenobjekte identifiziert, die sich auf das Datenfeld beziehen; und
Erzeugen strukturierter Konformitätsformulardaten basierend auf den kombinierten analysierten Formulardaten und den extrahierten Formulardaten, wobei die strukturierten Formulardaten für jedes Datenfeld die ersten und zweiten Datenobjekte und die ersten extrahierten Datenobjekte beinhalten, die sich auf das Datenfeld beziehen.

13. Nicht-transitorisches computerlesbares Medium nach Anspruch 11, wobei die Anweisungen ein drittes Analysiermodul beinhalten, das ausgelegt ist zum Erzeugen von dritten analysierten Formulardaten durch Analysieren der Konformitätsformulardaten mit einem dritten Analysierprozess, der für jedes Datenfeld dritte Datenobjekte identifiziert, die sich auf das Datenfeld beziehen.

14. Nicht-transitorisches computerlesbares Medium nach Anspruch 13, wobei das Erzeugen der kombinierten Formulardaten das Kombinieren der dritten analysierten Formulardaten mit den ersten und zweiten analysierten Formulardaten umfasst.

15. Nicht-transitorisches computerlesbares Medium nach Anspruch 11, wobei das erste Analysiermodul ein Analysiermodul für barrierefreie PDFs aufweist, das dafür ausgelegt ist, ein barrierefreies PDF zu analysieren, das sich auf das Konformitätsformular bezieht.

16. Nicht-transitorisches computerlesbares Medium nach Anspruch 11, wobei das zweite Analysiermodul ein Analysiermodul für Freitextformulare aufweist, das dafür ausgelegt ist, ein Freitextformular zu analysieren, das sich auf das Konformitätsformular bezieht.

17. System zur Erzeugung von strukturierten Konformitätsformulardaten, wobei das System umfasst:
mindestens einen Prozessor; und
mindestens einen Speicher, der mit dem mindestens einen Prozessor gekoppelt ist, wobei in dem mindestens einen Speicher Anweisungen gespeichert sind, die, wenn sie von einem beliebigen Satz der ein oder mehreren Prozessoren ausgeführt werden, einen Prozess durchführen, der beinhaltet:
Abrufen, mit einem Konformitätsformular-Speichermodul eines Rechensystems, von Konformitätsformulardaten in Bezug auf ein Konformitätsformular mit einer Vielzahl von Datenfeldern, wobei die Konformitätsformulardaten eine Vielzahl von Datentypen, die sich auf das Konformitätsformular beziehen, beinhalten;
Erzeugen, mit einem ersten Analysiermodul eines Rechensystems, erster analysierter Formulardaten durch Analysieren der Konformitätsformulardaten mit einem ersten Analysierprozess, der für jedes Datenfeld ein oder mehrere erste Datenobjekte identifiziert, die sich auf das Datenfeld beziehen, wobei das Erzeugen der ersten analysierten Formulardaten das Analysieren eines ersten Datentyps der Vielzahl von Datentypen umfasst, um die ein oder mehreren ersten Datenobjekte zu identifizieren;
Erzeugen, mit einem zweiten Analysiermodul eines Rechensystems, zweiter analysierter Formulardaten durch Analysieren der Konformitätsformulardaten mit einem zweiten Analysierprozess, der für jedes Datenfeld ein oder mehrere zweite Datenobjekte identifiziert, die sich auf das Datenfeld beziehen, wobei das Erzeugen der zweiten analysierten Formulardaten das Analysieren eines zweiten Datentyps der Vielzahl von Datentypen umfasst, um die ein oder mehreren zweiten Datenobjekte zu identifizieren;
Erzeugen, mit einem Kombiniermodul eines Rechensystems, kombinierter analysierter Formulardaten durch Kombinieren der ersten analysierten Formulardaten mit den zweiten analysierten Formulardaten, wobei die kombinierten Formulardaten für jedes Datenfeld die jeweiligen ersten und zweiten Datenobjekte beinhalten, die sich auf das Datenfeld beziehen;
Erzeugen, mit einem ersten Extrahiermodul eines Rechensystems, erster extrahierter Formulardaten durch Ausführen eines ersten Extraktionsprozesses an den kombinierten analysierten Formulardaten, wobei der erste Extraktionsprozess für jedes Datenfeld erste extrahierte Datenobjekte identifiziert, die sich auf das Datenfeld beziehen; und
Erzeugen, mit einem Erzeugungsmodul für strukturierte Konformitätsformulardaten eines Rechensystems, strukturierter Konformitätsformulardaten basierend auf den kombinierten analysierten Formulardaten und den extrahierten Formulardaten, wobei die strukturierten Formulardaten für jedes Datenfeld die ersten und zweiten Datenobjekte und die ersten extrahierten Datenobjekte beinhalten, die sich auf das Datenfeld beziehen.

18. System nach Anspruch 17, wobei der Prozess ferner beinhaltet, zweite extrahierte Formulardaten durch Ausführen eines zweiten Extraktionsprozesses an den kombinierten analysierten Formulardaten zu extrahieren, wobei der zweite Extraktionsprozess für jedes Datenfeld zweite extrahierte Datenobjekte identifiziert, die sich auf das Datenfeld beziehen.

19. System nach Anspruch 18, wobei die strukturierten Formulardaten die zweiten extrahierten Datenobjekte beinhalten.

20. System nach Anspruch 19, wobei das Konformitätsformular ein Steuerformular ist.

21. System nach Anspruch 17, ferner umfassend das Bereitstellen der strukturierten Konformitätsformulardaten an ein elektronisches Konformitätsformular-Aufbereitungssystem.

22. System nach Anspruch 21, ferner umfassend das Erzeugen, für eines oder mehrere der Datenfelder, von entsprechenden geeigneten Funktionen, um korrekte Datenwerte für die ein oder mehreren Datenfelder bereitzustellen, basierend auf den strukturierten Konformitätsformulardaten, wobei ein korrekter Datenwert ein Datenwert ist, der einer erwarteten Eingabe in das Datenfeld entspricht.

23. System nach Anspruch 17, wobei das Erzeugen der kombinierten analysierten Formulardaten das Zuordnen von Behördennamen, die sich auf das Konformitätsformular beziehen, zu internen Namen, die sich auf das Konformitätsformular beziehen, einschließt, wobei die Behördennamen Namen einschließen, die von einer Behörde ausgegeben werden, die das Konformitätsformular ausgegeben hat, und wobei die internen Namen Namen einschließen, die von einem Konformitätsformular-Aufbereitungssystem ausgegeben werden.

## Revendications

1. Procédé mis en œuvre par un système informatique pour générer des données de formulaire structuré de conformité, le procédé comportant les étapes consistant à :
récupérer des données de formulaire de conformité liées à un formulaire de conformité doté d'une pluralité de champs de données, les données de formulaire de conformité comprenant une pluralité de types de données liés au formulaire de conformité ;
générer des premières données de formulaire analysées en analysant les données de formulaire de conformité à l'aide d'un premier processus d'analyse qui identifie, pour chaque champ de données, un ou plusieurs premiers éléments de données liés au champ de données, la génération des premières données de formulaire analysées comprenant l'analyse d'un premier type de données de la pluralité de types de données pour identifier le ou les premiers éléments de données ;
générer des deuxièmes données de formulaire analysées en analysant les données de formulaire de conformité à l'aide d'un deuxième processus d'analyse qui identifie, pour chaque champ de données, un ou plusieurs deuxièmes éléments de données liés au champ de données, la génération des deuxièmes données de formulaire analysées comprenant l'analyse d'un deuxième type de données de la pluralité de types de données pour identifier le ou les deuxièmes éléments de données ;
générer des données de formulaire analysées combinées en combinant les premières données de formulaire analysées avec les deuxièmes données de formulaire analysées, les données de formulaire combinées comprenant, pour chaque champ de données, les premiers et deuxièmes éléments respectifs de données liés au champ de données ;
générer des premières données de formulaire extraites en effectuant un premier processus d'extraction sur les données de formulaire analysées combinées, le premier processus d'extraction identifiant, pour chaque champ de données, des premiers éléments de données extraites liés au champ de données ; et
générer des données de formulaire structuré de conformité d'après les données de formulaire analysées combinées et les données de formulaire extraites, les données de formulaire structuré comprenant, pour chaque champ de données, les premiers et deuxièmes éléments de données et les premiers éléments de données extraites liés au champ de données.

2. Procédé selon la revendication 1, les données de formulaire analysées combinées étant lisible par machine.

3. Procédé selon la revendication 1, comportant en outre la génération de troisièmes données de formulaire analysées en analysant les données de formulaire de conformité à l'aide d'un troisième processus d'analyse qui identifie, pour chaque champ de données, des troisièmes éléments de données liés au champ de données.

4. Procédé selon la revendication 1, les données de formulaire de conformité comprenant :
i) des données de formulaire en texte libre liées à une version en texte libre du formulaire de conformité ; ou
ii) des données PDF accessibles liées à une version PDF accessible du formulaire de conformité ; ou
iii) des données de formulaire interne liées à un ou plusieurs formulaires internes associées au formulaire de conformité ; ou
iv) des données de fiches de travail liées au formulaire de conformité.

5. Procédé selon la revendication 4, le premier ou le deuxième processus d'analyse comprenant :
i) l'analyse des données de formulaire en texte libre ; ou
ii) l'analyse des données PDF accessibles ; ou
iii) l'analyse des données de formulaire interne ; ou
iv) l'analyse des données de fiches de travail.

6. Procédé selon la revendication 1, les données de formulaire de conformité comprenant des données d'instructions d'organisme liées à des instructions fournies par un organisme ayant émis le formulaire de conformité.

7. Procédé selon la revendication 1, le premier ou le deuxième processus d'analyse comprenant l'analyse des données d'instructions d'organisme.

8. Procédé selon la revendication 1, le premier processus d'extraction comprenant l'identification, pour chaque champ de données et à partir des données de formulaire analysées combinées, d'une ou de plusieurs dépendances pour générer une valeur adéquate de données pour le champ de données, une valeur adéquate de données étant une valeur de données qui correspond à une entrée prévue dans le champ de données, et optionnellement :
les données de formulaire structuré de conformité comprenant, pour chaque champ de données, la ou les dépendances pour générer une valeur adéquate de données pour le champ de données.

9. Procédé selon la revendication 1, le premier processus d'extraction comprenant l'identification, pour chaque champ de données et à partir des données de formulaire analysées combinées, d'une ou de plusieurs constantes pour générer une valeur adéquate de données pour le champ de données, une valeur adéquate de données étant une valeur de données qui correspond à une entrée prévue dans le champ de données; et optionnellement :
les données de formulaire structuré de conformité indiquant, pour chaque champ de données, la ou les constantes pour générer une valeur adéquate de données pour le champ de données.

10. Procédé selon la revendication 1, le premier processus d'extraction comprenant l'identification, pour chaque champ de données et à partir des données de formulaire analysées combinées, d'un ou de plusieurs concepts liés au champ de données; et optionnellement :
les données de formulaire structuré de conformité indiquant, pour chaque champ de données, le ou les concepts liés au champ de données.

11. Support non transitoire lisible par ordinateur doté d'une pluralité d'instructions exécutables par ordinateur qui, lorsqu'elles sont exécutées par un processeur, réalisent un procédé de génération de données de formulaire structuré de conformité, les instructions comportant :
un module de stockage de formulaire de conformité configuré pour stocker des données de formulaire de conformité liées à un formulaire de conformité doté d'une pluralité de champs de données qui s'attendent à des valeurs de données selon des fonctions spécifiées, les données de formulaire de conformité comprenant une pluralité de types de données liés au formulaire de conformité ;
un premier module d'analyse configuré pour générer des premières données de formulaire analysées en analysant les données de formulaire de conformité à l'aide d'un premier processus d'analyse qui identifie, pour chaque champ de données, un ou plusieurs premiers éléments de données liés au champ de données, la génération des premières données de formulaire analysées comprenant l'analyse d'un premier type de données de la pluralité de types de données pour identifier le ou les premiers éléments de données ;
un deuxième module d'analyse configuré pour générer des deuxièmes données de formulaire analysées en analysant les données de formulaire de conformité à l'aide d'un deuxième processus d'analyse qui identifie, pour chaque champ de données, un ou plusieurs deuxièmes éléments de données liés au champ de données, la génération des deuxièmes données de formulaire analysées comprenant l'analyse d'un deuxième type de données de la pluralité de types de données pour identifier le ou les deuxièmes éléments de données ; et
un module combineur configuré pour :
générer des données de formulaire analysées combinées en combinant les premières données de formulaire analysées avec les deuxièmes données de formulaire analysées, les données de formulaire combinées comprenant, pour chaque champ de données, les premiers et deuxièmes éléments respectifs de données liés au champ de données ;
générer des premières données de formulaire extraites en effectuant un premier processus d'extraction sur les données de formulaire analysées combinées, le premier processus d'extraction identifiant, pour chaque champ de données, des premiers éléments de données extraites liés au champ de données ; et
générer des données de formulaire structuré de conformité d'après les données de formulaire analysées combinées et les données de formulaire extraites, les données de formulaire structuré comprenant, pour chaque champ de données, les premiers et deuxièmes éléments de données et les premiers éléments de données extraites liés au champ de données.

12. Support non transitoire lisible par ordinateur selon la revendication 11, les instructions comprenant :
un premier module extracteur configuré pour générer des données de formulaire extraites en effectuant un processus d'extraction sur les données de formulaire analysées combinées, le premier processus d'extraction identifiant, pour chaque champ de données, des éléments de données extraites liés au champ de données ; et
générer des données de formulaire structuré de conformité d'après les données de formulaire analysées combinées et les données de formulaire extraites, les données de formulaire structuré comprenant, pour chaque champ de données, les premiers et deuxièmes éléments de données et les premiers éléments de données extraites liés au champ de données.

13. Support non transitoire lisible par ordinateur selon la revendication 11, les instructions comprenant un troisième module d'analyse configuré pour générer des troisièmes données de formulaire analysées en analysant les données de formulaire de conformité à l'aide d'un troisième processus d'analyse qui identifie, pour chaque champ de données, des troisièmes éléments de données liés au champ de données.

14. Support non transitoire lisible par ordinateur selon la revendication 13, la génération des données de formulaire combinées comprenant la combinaison des troisièmes données de formulaire analysées avec les premières et deuxièmes données de formulaire analysées.

15. Support non transitoire lisible par ordinateur selon la revendication 11, le premier module d'analyse comprenant un module d'analyse de PDF accessible configuré pour analyser un PDF accessible lié au formulaire de conformité.

16. Support non transitoire lisible par ordinateur selon la revendication 11, le deuxième module d'analyse comprenant un module d'analyse de formulaire en texte libre configuré pour analyser un formulaire en texte libre lié au formulaire de conformité.

17. Système de génération de données de formulaire structuré de conformité, le système comportant :
au moins un processeur ; et
au moins une mémoire couplée au(x) processeur(s), la ou les mémoires comprenant, stockées dans celles-ci, des instructions qui, lorsqu'elles sont exécutées par un ensemble quelconque du ou des processeurs, effectuent un processus comprenant les étapes consistant à :
récupérer, à l'aide d'un module de stockage de formulaire de conformité d'un système informatique, des données de formulaire de conformité liées à un formulaire de conformité doté d'une pluralité de champs de données, les données de formulaire de conformité comprenant une pluralité de types de données liés au formulaire de conformité ;
générer, à l'aide d'un premier module d'analyse d'un système informatique, des premières données de formulaire analysées en analysant les données de formulaire de conformité à l'aide d'un premier processus d'analyse qui identifie, pour chaque champ de données, un ou plusieurs premiers éléments de données liés au champ de données, la génération des premières données de formulaire analysées comprenant l'analyse d'un premier type de données de la pluralité de types de données pour identifier le ou les premiers éléments de données ;
générer, à l'aide d'un deuxième module d'analyse d'un système informatique, des deuxièmes données de formulaire analysées en analysant les données de formulaire de conformité à l'aide d'un deuxième processus d'analyse qui identifie, pour chaque champ de données, un ou plusieurs deuxièmes éléments de données liés au champ de données, la génération des deuxièmes données de formulaire analysées comprenant l'analyse d'un deuxième type de données de la pluralité de types de données pour identifier le ou les deuxièmes éléments de données ;
générer, à l'aide d'un module combineur d'un système informatique, des données de formulaire analysées combinées en combinant les premières données de formulaire analysées avec les deuxièmes données de formulaire analysées, les données de formulaire combinées comprenant, pour chaque champ de données, les premiers et deuxièmes éléments respectifs de données liés au champ de données ;
générer, à l'aide d'un premier module extracteur d'un système informatique, des premières données de formulaire extraites en effectuant un premier processus d'extraction sur les données de formulaire analysées combinées, le premier processus d'extraction identifiant, pour chaque champ de données, des premiers éléments de données extraites liés au champ de données ; et
générer, à l'aide d'un module de génération de données de formulaire structuré de conformité d'un système informatique, des données de formulaire structuré de conformité d'après les données de formulaire analysées combinées et les données de formulaire extraites, les données de formulaire structuré comprenant, pour chaque champ de données, les premiers et deuxièmes éléments de données et les premiers éléments de données extraites liés au champ de données.

18. Système selon la revendication 17, le processus comprenant en outre la génération de deuxièmes données de formulaire extraites en effectuant un deuxième processus d'extraction sur les données de formulaire analysées combinées, le deuxième processus d'extraction identifiant, pour chaque champ de données, des deuxièmes éléments de données extraites liés au champ de données.

19. Système selon la revendication 18, les données de formulaire structuré comprenant les deuxièmes éléments de données extraites.

20. Système selon la revendication 19, le formulaire de conformité étant un formulaire d'impôts.

21. Système selon la revendication 17, comportant en outre la fourniture des données de formulaire structuré de conformité à un système électronique de préparation de formulaires de conformité.

22. Système selon la revendication 21, comportant en outre la génération, pour un ou plusieurs des champs de données, de fonctions appropriées respectives pour fournir des valeurs adéquates de données pour le ou les champs de données d'après les données de formulaire structuré de conformité, une valeur adéquate de données étant une valeur de données qui correspond à une entrée prévue dans le champ de données.

23. Système selon la revendication 17, la génération des données de formulaire analysées combinées comprenant le fait d'associer des noms d'organisme liées au formulaire de conformité à des noms internes liées au formulaire de conformité, les noms d'organisme comprenant des noms délivrés par un organisme ayant émis le formulaire de conformité et les noms internes comprenant des noms délivrés par un système de préparation de formulaires de conformité.
